# EUROPÄISCHE PATENTSCHRIFT

(11) **EP 2 961 617 B1**
(45) Veröffentlichungstag und Bekanntmachung des Hinweises auf die Patenterteilung: **25.04.2018**
(21) Anmeldenummer: 14706614.6
(22) Anmeldetag: 26.02.2014
(51) Int. Cl.: B42D 25/355, B42D 15/08, G06K 19/067, G06K 19/077

(54) **MEHRSCHICHTKÖRPER UND VERFAHREN ZUM HERSTELLEN EINES MEHRSCHICHTKÖRPERS**
MULTILAYER BODY AND METHOD FOR PRODUCING A MULTILAYER BODY
CORPS MULTICOUCHE ET PROCÉDÉ POUR FABRIQUER UN CORPS MULTICOUCHE

(30) Priorität: 26.02.2013 DE 102013101881
(43) Veröffentlichungstag der Anmeldung: 06.01.2016
(73) Patentinhaber: PolyIC GmbH & Co. KG, 90763 Fürth (DE); Leonhard Kurz GmbH & Co. KG, 90763 Fürth (DE); OVD Kinegram AG, 6301 Zug (CH)
(72) Erfinder: FIX, Walter, 90763 Fürth (DE); WALTER, Manfred, 90419 Nürnberg (DE); TOMPKIN, Wayne, Robert, CH-5400 Baden (CH); SCHILLING, Andreas, CH-6332 Hagendorn (ZG) (CH); SCHMIDT, Klaus, 90607 Rückersdorf (DE); METZGER, Jürgen, 90455 Nürnberg (DE)
(74) Vertreter: Louis Pöhlau Lohrentz
(86) Internationale Anmeldenummer: PCT/EP2014/053689
(87) Internationale Veröffentlichungsnummer: WO 2014/131783

(56) Entgegenhaltungen:
- EP-A1- 2 431 923
- WO-A1-2007/036696
- WO-A1-2011/154524
- DE-A1-102005 049 891
- GB-A- 2 462 290

## Beschreibung

Die Erfindung betrifft einen Mehrschichtkörper sowie ein Verfahren zum Herstellen eines Mehrschichtkörpers.

Es geht um einen solchen Mehrschichtkörper, bei dem durch eine Anordnung von elektrisch leitfähigem Material in einer Schicht auf einem Träger eine Information kodiert wird, die kapazitiv auslesbar ist.

Der Mehrschichtkörper kann insbesondere in Form einer Transferfolie, einer Laminierfolie oder eines Sicherheitsfadens ausgebildet sein. Der Mehrschichtkörper kann auf eine Vielzahl unterschiedlicher Substrate aufgebracht oder in diese integriert sein, insbesondere Banknoten, Kreditkarten, Ausweisdokumente, Pässe, Tickets, Fahr- und Eintrittskarten, Reisedokumente, Produktverpackungen, Anhänger, Spielkarten usw.

So ist es aus der WO 2011/154524 A1 bekannt, auf einem Substrat, das Papier, aber auch Kunststoff umfassen kann, mehrere elektrisch leitfähige Bereiche bereitzustellen (so genannte Koppelflächen), die in einem Ausführungsbeispiel sämtlich über Leiterbahnen galvanisch miteinander gekoppelt sind. Die Größe der elektrisch leitfähigen Bereiche ist passend zu Messfeldern eines Auslesegeräts gewählt. Es geht hierbei insbesondere um ein Auslesegerät mit einer Tastfeldfunktionalität. Beim Auflegen des Substrats mit den elektrisch leitfähigen Bereichen kommt es zu einer kapazitiven Koppelung zwischen diesen elektrisch leitfähigen Bereichen und den Messfeldern. Dadurch wird derselbe Effekt erzielt, wie wenn sich ein Finger einem solchen Messfeld nähert. Durch die elektrisch leitfähigen Bereiche werden somit die Eigenschaften von Fingerkuppen nachgebildet.

In der WO 2012/038434 A1 ist offenbart, ein solches Substrat mit darauf befindlichen elektrisch leitfähigen Bereichen in einer Banknote einzusetzen. Ferner ist in der WO 2007/036696 A1 ein Mehrschichtkörper mit den Merkmalen des Oberbegriffs des Anspruchs 1 offenbart. Immer dann, wenn die Kodierung einer Information durch elektrisch leitfähige Bereiche als Sicherheitsfunktion dienen soll, besteht das Problem, dass die Kodierung nicht ohne Weiteres ersichtlich sein soll; sie soll ausschließlich mithilfe des betreffenden Auslesegeräts ausgelesen werden können, nicht aber aufgrund einer reinen Betrachtung erkennbar sein. Sobald die Kodierung visuell erkennbar ist, wäre nämlich die Gefahr einer leichten Nachbildbarkeit gegeben. Im Stand der Technik wird aus diesem Grunde eine größere Fläche des Substrats, die die elektrisch leitfähigen Bereiche enthält, oder das ganze Substrat, mit einer opaken (nicht transparenten) Deckschicht abgedeckt. Gerade bei Sicherheitselementen und -dokumenten, durch die eine Sicherheitsfunktion bereitgestellt werden soll, ist es aber wünschenswert, wenn visuell auf die Sicherheitsfunktion aufmerksam gemacht wird. Durch die opake Deckschicht bestehen Einschränkungen in einer diesbezüglichen Gestaltung.

Es ist daher die Aufgabe der vorliegenden Erfindung, einen Weg aufzuzeigen, wie bei einem entsprechenden Mehrschichtkörper ohne eine opake Deckschicht dafür gesorgt wird, dass die Kodierung trotzdem nicht visuell erkennbar ist.

Die Aufgabe wird in einem ersten Aspekt durch einen Mehrschichtkörper mit den Merkmalen gemäß Patentanspruch 1 gelöst, dazugehörig einen Gegenstand, wie etwa ein Wertdokument oder Wertgegenstand, gemäß Anspruch 12, eine Banknote gemäß Anspruch 13 und eine Verpackung oder verpackte Ware gemäß Anspruch 14 sowie in einem zweiten Aspekt durch ein Verfahren mit den Merkmalen gemäß Patentanspruch 15 gelöst.

Der erfindungsgemäße Mehrschichtkörper weist somit einen Träger (insbesondere eine Trägerfolie) und eine darauf angeordnete Schicht auf, welche elektrisch leitfähiges Material in einer solchen Anordnung umfasst, dass zumindest ein Informationsbereich und zumindest ein Hintergrundbereich bereitgestellt sind, wobei Informationsbereich und Hintergrundbereich galvanisch voneinander getrennt sind (insbesondere obwohl sie in der selben Schicht angeordnet sind, die die einzige Schicht ist oder sein kann), wobei
- in jedem Informationsbereich eine erste Zone mit elektrisch leitfähigem Material bereitgestellt ist, über deren Gesamtheit hinweg ihr elektrisch leitfähiges Material leitend verbunden ist, und wobei
- in jedem Hintergrundbereich eine Mehrzahl von zweiten Zonen mit elektrisch leitfähigem Material bereitgestellt ist, wobei die zweiten Zonen galvanisch voneinander getrennt sind.

Bei dem erfindungsgemäßen Mehrschichtkörper wird somit zusätzlich ein neutraler Hintergrundbereich bereitgestellt, sodass das elektrisch leitfähige Material nicht nur in dem zumindest einen Informationsbereich vorgesehen ist; das elektrisch leitfähige Material des Hintergrundbereichs kann somit dazu dienen, einen Betrachter vom Informationsbereich abzulenken.

Bevorzugt ist vorgesehen, dass jede erste Zone eine um einen Faktor von mindestens zwei, bevorzugt mindestens fünf, besonders bevorzugt mindestens zehn, ganz besonders bevorzugt mindestens 30, größere Fläche einnimmt als jede der zweiten Zonen.

Es kann durch diese Maßnahme gewährleistet werden, dass der neutrale Hintergrundbereich keine durch kapazitive Auslesung erfassbare Information trägt. Er kann jedoch eine optische Information, insbesondere in Form eines dekorativen Elements und/oder in Form eines optischen Sicherheitsmerkmals wie z.B. diffraktiver oder refraktiver Strukturen bereitstellen.

Es vorgesehen ist, dass das elektrisch leitfähige Material mit einer mittleren Flächenbelegung bereitgestellt ist, die über die Informationsbereiche und die Hintergrundbereiche hinweg um weniger als 25% variiert, bevorzugt um weniger als 10% variiert, besonders bevorzugt um weniger als 5% variiert, wobei die mittlere Flächenbelegung bevorzugt berechnet wird auf Teilflächen, die jeweils die gleiche vorbestimmte Größe haben, die 500 µm mal 500 µm, 300 µm mal 300 µm, 250 µm mal 250 µm, 200 µm mal 200 µm, 150 µm mal 150 µm oder 100 µm mal 100 µm beträgt.

Anders ausgedrückt unterscheidet sich eine ausgesuchte erste Teilfläche mit den Abmessungen von z.B. 200 µm mal 200 µm im Vergleich zu jeder beliebigen anderen Teilfläche um den genannten Prozentsatz. Liegt beispielsweise die mittlere Flächenbelegung in der ersten Teilfläche bei 60%, dann läge eine Variation um 25% der 60% bei einem Viertel der 60%, also bei 15 Prozentpunkten. Mit anderen Worten könnte ausgehend von einer mittleren Flächenbelegung in der ersten Teilfläche von 60% in allen anderen Teilflächen die mittlere Flächenbelegung zwischen 45% (also 60% minus 15%) und 75% (also 60% plus 15%) liegen. Die mittlere Flächenbelegung als solche ist unabhängig von der genauen mikroskopischen Ausgestaltung.

Sind die genannten Bedingungen erfüllt, dann wird durch die Gesamtheit von jedem Informationsbereich mit jedem Hintergrundbereich ein homogener Eindruck des Mehrschichtkörpers hervorgerufen: Bei der genannten Abmessung von 300 µm liegt ungefähr die Auflösungsgrenze des menschlichen Auges. Hierbei ist ein Abstand von etwa 30 cm zwischen dem aufzulösenden Objekt und dem Auge des Beobachters vorausgesetzt. Ein Unterschied zwischen unterschiedlichen Flächenbelegungen ist nur dann ersichtlich, wenn sich wesentlich größere Teilflächen in der Flächenbelegung voneinander unterscheiden. In einem Fall ist eine gleichbleibende Transparenz, insbesondere Transmissivität, gegeben, nämlich die Fähigkeit, Licht durchzulassen. In einem anderen Fall (insbesondere bei metallischen Materialien als elektrisch leitfähigem Material) reflektiert das Material das Licht, wobei bei den genannten Bedingungen für homogene reflektierende Eigenschaften gesorgt ist.

In beiden Fällen ist durch den homogenen Gesamteindruck gewährleistet, dass man die Informationsbereiche nicht von den Hintergrundbereichen ohne weiteres visuell unterscheiden kann, sodass entsprechend auch ein visuelles Auslesen des Codes nicht möglich ist; vorzugsweise erkennt man noch nicht einmal, dass überhaupt eine Kodierung enthalten sein könnte.

Im ersten Fall ist bevorzugt die Tastfeldeinrichtung insgesamt transluzent oder transparent, insbesondere soll sie einen Transparenzgrad von mindestens 50%, bevorzugt von mindestens 80%, besonders bevorzugt von mindestens 90% und ganz besonders bevorzugt von mindestens 95% aufweisen. Dies lässt sich dadurch ermöglichen, dass Leiterbahnen eingesetzt werden, die eine Breite aus dem Bereich von 1 µm bis 40 µm, bevorzugt aus dem Bereich von 5 µm bis 25 µm aufweisen und insbesondere in einem Muster geeignet zueinander beabstandet angeordnet werden, so dass sich die zu der gewünschten Transmission gehörige Flächenbelegung mit opaken Leiterbahnen einstellt. Insbesondere in jeder ersten Zone soll aus dem elektrisch leitfähigen Material eine Mehrzahl von derartigen, insbesondere vernetzten, Leiterbahnen gebildet sein. Durch die Anordnung in Mustern ist insbesondere eine zuverlässige galvanische Verknüpfung der Leiterbahnen sichergestellt. In jedem Hintergrundbereich sind bevorzugt aus dem leitfähigem Material entsprechend Leiterbahnteile gebildet, die eine Breite aus dem Bereich von 1 µm bis 40 µm aufweisen, bevorzugt aus dem Bereich von 5 µm bis 25 µm aufweisen. Um in dem Hintergrundbereich die genannten zweiten Zonen mit kleinerer Fläche als die erste Zone auszubilden, sind die einzelnen Leiterbahnteile galvanisch von Leiterbahnteilen einer anderen zweiten Zone in dem jeweiligen Hintergrundbereich über einen Spalt von einer Länge getrennt, die zwischen 50% und 200% der Breite der Leiterbahnteile beträgt.

Bei Wahl der Leiterbahnen mit einer solchen Breite und insbesondere solchen geeigneten Abständen, sind die einzelnen Leiterbahnen durch das menschliche Auge nicht erkennbar; der Effekt der Bereitstellung der Leiterbahnen und Leiterbahnteile mit solchen Parametern ist lediglich der, dass der gesamte Transparenzgrad im Vergleich zu einem rein durchsichtigen Material leicht verringert ist. Es wird also durch die Bereitstellung derartiger Leiterbahnen eine elektrische Funktionalität bereitgestellt, ohne dass dies unmittelbar ersichtlich wäre. Insbesondere auch durch die kleine Länge der Spalte zwischen den einzelnen Leiterbahnteilen ist gewährleistet, dass auch deren Unterbrechung als solche nicht durch ein menschliches Auge aufgelöst werden kann.

Bevorzugt ist bei dieser Ausführungsform vorgesehen, dass die Leiterbahnen aus jedem Informationsbereich dieselbe erste Breite haben und die Leiterbahnteile aus jedem Hintergrundbereich dieselbe zweite Breite haben, wobei sich die erste und zweite Breite nur um höchstens 30% des jeweils größeren Werts voneinander unterscheiden, bevorzugt sind sie sogar gleich. Durch diese Maßnahme ist in besonders einfacher Weise gewährleistet, dass auch die mittlere Flächenbelegung im Wesentlichen dieselbe ist. Was für die Breite gilt, gilt auf ähnliche Weise für die Beabstandung der Leiterbahnen. In einem regelmäßigen Leiterbahnenmuster kann die Beabstandung bei zwischen 50 µm und 300 µm, bevorzugt zwischen 120 µm und 250 µm liegen. Bei einem unregelmäßigen Muster liegt der mittlere Abstand in dieser Größenordnung.

Besonders gut lassen sich Leiterbahnteile durch Vorsehen von Unterbrechungen in einem regelmäßigen Leiterbahnmuster ausbilden. Dadurch sind jeweils kreuzförmige Strukturen bereitgestellt. Allgemeiner ausgedrückt, überschneiden sich zwei Leiterbahnteile in den zweiten Zonen jeweils.

Damit auf besonders einfache Weise das Merkmal der galvanischen Trennung von Informationsbereich und Hintergrundbereich auch bei Verwirklichung des Merkmals der nur gering variierenden mittleren Flächenbelegung erfüllt ist, sind bevorzugt Leiterbahnen eines Informationsbereichs je einem Leiterbahnteil eines Hintergrundbereichs zugeordnet, von dem sie über einen Spalt einer Breite getrennt sind, welche zwischen der Hälfte und dem Zehnfachen der Breite der Leiterbahnen liegt.

Im Sinne der Erzielung einer homogenen reflektierenden Wirkung des Mehrschichtkörpers sollte seine mittlere Flächenbelegung mit dem elektrisch leitfähigen, insbesondere metallischen Material eher höher sein. Zwar erzielt man schon ab einer mittleren Flächenbelegung von mehr als 20%, bevorzugt mehr als 25%, einen reflektierenden Effekt, wünschenswert ist aber eine mittlere Flächenbelegung von 50% oder mehr, bevorzugt ist sogar eine fast vollflächige Belegung mit elektrisch leitfähigem Material vorgesehen mit lediglich 15%, bevorzugt 10%, besonders bevorzugt 5% freien (also insbesondere transparenten, nichtleitenden) Flächenanteilen.

Eine diesbezügliche Anordnung von elektrisch leitfähigem Material kann insbesondere umfassen, dass jede zweite Zone vollflächig mit elektrisch leitfähigem Material belegt ist.

Die ersten Zonen, die wesentlich größer als die zweiten Zonen sind, können ihrerseits entsprechend vollflächig mit elektrisch leitfähigem Material belegt sein. Alternativ ist es hierzu möglich, dass in den ersten Zonen jeweils mehrere Teilbereiche vollflächig mit elektrisch leitfähigem Material belegt sind, die über Stege miteinander galvanisch gekoppelt sind. So können die jeweiligen Teilbereiche in der ersten Zone genauso groß sein und dieselbe Form haben wie die zweiten Zonen; der Unterschied besteht dann lediglich darin, dass die zweiten Zonen galvanisch vollständig getrennt sind, und dass die entsprechenden geschlossenen Teilbereiche in den ersten Zonen über die genannten Stege miteinander gekoppelt sind. Auf diese Weise wird ein Eindruck einer besonderen Homogenität erzielt.

Um den Informationsbereich von dem Hintergrundbereich auf nicht unmittelbar sichtbare Weise abzugrenzen, kann ein geschlossener Bereich einer zweiten Zone von einem geschlossenen Bereich oder Teilbereich einer ersten Zone über einen Spalt getrennt sein, der nicht breiter als 150 µm ist. Diese Spaltbreite kann die Breite der Beabstandung der zweiten Zonen in dem Hintergrundbereich sein und auch die Breite der Beabstandung der geschlossenen Bereiche in der ersten Zone bei Nichtberücksichtigung der Stege.

Da die Leiterbahnen selbst und die Unterbrechungen zwischen benachbarten Leiterbahnen ohne technische Hilfsmittel bei Einhaltung der obigen Parametervorgaben durch das bloße Auge nicht auflösbar sind, ist es insbesondere nicht zwingend, dass der Hintergrundbereich und der Informationsbereich gemäß einem identischen Muster ausgebildet sind. Insbesondere kann vorgesehen sein, dass flächige, linienförmige und/oder punktförmige Bereiche ohne leitfähiges Material im Informationsbereich gemäß einem ersten Muster und im Hintergrundbereich gemäß einem vom ersten Muster verschiedenen zweiten Muster ausgebildet sind. Ein solches erstes und/oder zweites Muster kann insbesondere durch eine statistische Verteilung kleiner, transparenter und nichtleitender punktförmiger Bereiche gebildet sein. Vorzugsweise weisen dann der Hintergrundbereich und der Informationsbereich weiterhin im Wesentlichen gleiche Flächenbelegungen mit dem elektrisch leitfähigen Material auf. Hierdurch ist ein homogener optischer Eindruck gewährleistet.

Bei einer bevorzugten Ausführungsform des Mehrschichtkörpers in allen bisher genannten Alternativen ist eine Kombination mit optischen Sicherheitsmerkmalen, insbesondere visuell sichtbaren optischen Sicherheitsmerkmalen vorgesehen, durch die auf die Sicherheitsfunktion aufmerksam gemacht wird. Z.B. können diese optischen Sicherheitsmerkmale optisch variable Sicherheitsmerkmale sein, deren optischen Eigenschaften sich abhängig vom Blickwinkel und/oder der Beleuchtungsrichtung verändern. Bei dekorativen Anwendungen, beispielsweise auf Verpackungen, ist es wünschenswert, wenn durch eine ansprechende, insbesondere visuelle Gestaltung das entsprechende Produkt besonders vorteilhaft und/oder auffallend dargestellt wird. Dies gilt insbesondere auch für Sicherheitselemente, welche für die Fälschungssicherung kommerzieller Produkte Einsatz finden, z.B. um mittels des Sicherheitselements die Marke bei bestimmten Produkten, etwa pharmazeutischen Produkten oder Zigaretten, besonders hervorzuheben. Insbesondere, wenn das elektrisch leitfähige Material vollflächig in den zweiten Zonen und den ersten Zonen bzw. Teilbereichen der ersten Zonen ausgebildet ist, kann das elektrisch leitfähige Material gleichzeitig eine weitere Funktionalität als Reflexionsschicht für optische Sicherheitsmerkmale wie z.B. diffraktive oder refraktive Strukturen oder für dreischichtige Fabry-Perot-Dünnfilm-Elemente mit Farbwechseleffekt bereitstellen. So ist bevorzugt vorgesehen, dass in dem elektrisch leitfähigem Material in zumindest einem geschlossenen Bereich oder Teilbereich und bevorzugt mehrere solche Bereiche übergreifend ein optisches Sicherheitsmerkmal ausgebildet ist. Somit ist das elektrisch leitfähige Material Teil eines Schichtaufbaus (stellt eine Schicht dar) eines optischen Sicherheitsmerkmals und/oder erbringt eine Funktion eines solchen optischen Sicherheitsmerkmals. Das Sicherheitsmerkmal weist vorzugsweise eine Mikrostruktur in Form eines linearen oder gekreuzten Sinus- oder Rechteck-Beugungsgitters, einer Beugungsstruktur Nullter Ordnung, eines 2D/3D- oder 3D-Hologramms, eines Kinegram®, eines Trustseal®, eines farbigen oder achromatischen Blaze-Gitters, einer isotropen oder anisotropen Mattstruktur, eine Mikrolinsenstruktur, eine Makrostruktur, ein Dünnfilmfarbwechselsystem, z.B. ein Fabry-Perot-Dünnfilmsystem oder dergleichen auf.

Das lineare oder gekreuzte Sinus- oder Rechteck-Beugungsgitter kann insbesondere eine Spatialfrequenz aus dem Bereich von 100 Linien/Millimeter bis 3000 Linien/Millimeter aufweisen.

Bei der Mikrostruktur kann bevorzugt auch vorgesehen sein, dass eine Periodizität gegeben ist, bei der die Periode kleiner als eine Wellenlänge aus dem Wellenlängenbereich des sichtbaren Lichts ist.

Solche Mikrostrukturen können insbesondere in eine Lackschicht eingeprägt sein, auf der ihrerseits die elektrisch leitfähige Material-Schicht aufgebracht ist.

Ein Dünnfilmfarbwechselsystem (wie etwa ein Fabry-Perot-Dünnfilmsystem) besteht aus einer Abfolge von mehreren dünnen, insbesondere transparenten Schichten, deren Dicke z.B. jeweils die Hälfte oder z.B. ein Viertel einer Wellenlänge aus dem Wellenlängenbereich des sichtbaren Lichts ist, d. h. dass die sogenannte λ/2- bzw. λ/4-Bedingung erfüllt wird. Ist dies verwirklicht, dann wirken diese Dünnfilmfarbwechselsysteme farbig, wobei sich die Farbe bei einer Änderung des Betrachtungswinkels ändert.

Wird also die weitere Funktionalität des elektrisch leitfähigen Materials bereitgestellt (etwa als Reflexionsschicht, wie oben dargestellt), dann ist es möglich, dass der Mehrschichtkörper als eine Sicherheitsfunktion beinhaltend erkannt wird, wobei eben dann die optisch variable Vorrichtung einen erkennbaren optisch variablen Effekt bereitstellt, z.B. in der Form einer bestimmten visuellen zweiten Information.

Die Mikrostruktur kann über ihren gesamten Flächenbereich weitgehend dieselben Strukturparameter wie z.B. Strukturtiefe, Azimutwinkel, Reliefform aufweisen oder diese Strukturparameter oder die Art der Mikrostruktur können über den Flächenbereich der Mikrostruktur variieren und dadurch ein Motiv ausbilden. Das Motiv kann dabei als Einzelbild oder als Endlosmotivmuster ausgebildet sein. Das Motiv bzw. die Mikrostruktur kann im Register, d.h. lagegenau zu den Bereichen oder Teilbereichen des elektrisch leitfähigen Materials ausgebildet sein oder davon unabhängig, d.h. nicht lagegenau ein Muster ausbilden. Die Lagegenauigkeit zwischen den Bereichen oder Teilbereichen des elektrisch leitfähigen Materials und der Mikrostruktur schwankt üblicherweise zwischen +/- 1 mm in x- und y-Richtung und +/- 0 mm. Dass eine für das menschliche Auge ohne Hilfsmittel nicht erkennbare Kodierung durch die Anordnung des elektrisch leitfähigen Materials bereitgestellt ist, wird durch den optisch variablen Effekt verschleiert. Die Flächenbelegung mit dem elektrisch leitfähigen Material bestimmt die Sichtbarkeit und/oder Erkennbarkeit der optischen Sicherheitsmerkmale, wenn das elektrisch leitfähige Material als Reflexionsschicht für optische Sicherheitsmerkmale dient. Ist die Flächenbelegung gering, so liegt das elektrisch leitfähige Material auch nur in geringer Flächenbelegung als Reflexionsschicht für das optische Sicherheitsmerkmal vor und das entsprechende Sicherheitsmerkmal ist vergleichsweise wenig brillant oder deutlich oder wenig kontrastreich erkennbar. Mit steigender Flächenbelegung des als Reflexionsschicht dienenden elektrisch leitfähigen Materials steigen die Brillanz, der Kontrast und die Erkennbarkeit dieser optischen Sicherheitsmerkmale. Zur Erhöhung der Sichtbarkeit der optischen Sicherheitsmerkmale kann zusätzlich zu der elektrisch leitfähigen Schicht eine zusätzliche, insbesondere vollflächige, nicht-leitende Reflexionsschicht vorgesehen sein, insbesondere aus nicht-leitenden Materialien mit hohem Brechungsindex, sogenannte HRI-Materialien (HRI = High Refractive Index).

Die Bereiche oder Teilbereiche des elektrisch leitenden Materials können in vorteilhafter Weise auch mit anderen, insbesondere dekorativen Schichten zusammenwirken. Beispielsweise können zusätzliche Farbschichten oder Effektschichten über und/oder unter dem elektrisch leitfähigen Material derartig vorgesehen sein, dass sich in Kombination mit dem elektrisch leitfähigen Material eine charakteristische Gestaltung oder ein charakteristisches Motiv ergibt, welches jedoch die eigentliche Anordnung des elektrisch leitfähigen Materials als Kodierung weitgehend verschleiert. Insbesondere können die Farbschichten so ausgebildet sein, dass durch eine dadurch erzeugte Ablenkung oder optische Täuschung die konkrete Ausformung des elektrisch leitfähigen Materials gerade nicht visuell erkennbar ist. Die zusätzlichen Farbschichten oder Effektschichten können auch optisch variable Pigmente in einem Bindemittel enthalten, sogenannte OVI (OVI = Optically Variable Inks). Diese einzelnen Pigmente können beispielsweise diffraktive Strukturen und/oder Reflexionsschichten und/oder Fabry-Perot-Dünnfilmsysteme aufweisen und dadurch charakteristische optische Effekte erzeugen. Die Farbschichten oder Effektschichten können zusätzlich oder alternativ weitere Inhaltsstoffe aufweisen, die insbesondere maschinenlesbar sind. Beispielsweise können dies magnetische Pigmente oder phosphoreszierende oder lumineszierende Stoffe sein.

Bevorzugt wird eine Mikrostruktur als optisches Sicherheitselement mit dem elektrisch leitfähigen Material als Reflexionsschicht gebildet, indem in einen vorzugsweise transparenten oder transparent farbigen Lack die Mikrostruktur mittels Stempelwerkzeugen abgeformt wird und anschließend diese Mikrostruktur mit einer dünnen Metallschicht vollflächig beschichtet, insbesondere bedampft wird. Mittels bekannter Strukturierungstechniken wie Laserablation, Ätzverfahren, Waschlackverfahren, mechanisches Entfernen oder Belichtungsverfahren wird anschließend das elektrisch leitfähige Material flächenbereichsweise entfernt, wodurch die endgültige Flächenbelegung definiert wird. Anschließend können auf die Mikrostruktur weitere Lackschichten und/oder Kleberschichten aufgebracht, insbesondere aufgedruckt werden. Beispielsweise kann ein heißsiegelfähiger Kleber aufgebracht werden, um den Mehrschichtkörper mittels Heißprägen auf ein Substrat applizieren zu können.

Bei einer besonders bevorzugten Ausführungsform dieser Ausgestaltung ist durch die Position, Größe, Ausrichtung und Form der ersten Zone eine erste Information kodiert (wobei sich die Kodierung auf die Form von Messfeldern einer Ausleseeinrichtung bezieht), und durch die optisch variable Vorrichtung wird eine visuelle zweite Information bereitgestellt, die entweder mit der ersten Information teilweise oder vollständig übereinstimmt oder diese erste Information zu einer Gesamtinformation ergänzt. Bei zumindest teilweiser Übereinstimmung ließe sich mit dem Auslesegerät die Information auslesen und dadurch bestätigen, dass das schwer fälschbare Sicherheitsmerkmal der Anordnung des elektrisch leitfähigen Materials in dem genannten Code zur Bereitstellung der ersten Information überhaupt vorhanden ist, und die ausgelesene Information ist dann auch besonders leicht als korrekt überprüfbar. Bei Ergänzung zu einer Gesamtinformation kann dies ebenfalls der Fall sein, insbesondere wenn beispielsweise unterschiedliche grafische Motivteile oder Wortteile durch die erste Information und die zweite Information bereitgestellt werden, auch unterschiedliche zusammengehörige grafische Motive, Wörter oder Satzteile. Genauso kann auch die zweite Information in der grafischen, nonverbalen Darstellung eines Gegenstands bestehen, dessen Name oder Beschreibung dann durch die erste Information bereitgestellt wird, in verbaler Form. Genauso kann die erste Information eine Quelle angeben, in der die visuelle zweite Information zugänglich ist; so kann auf die Seite eines Buchs, das ein solches Bild zeigt, verwiesen werden, oder es kann beispielsweise durch die erste Information auf eine Internetadresse (Webseite) verwiesen werden, wo die visuelle zweite Information wiedergegeben oder durch eine dritte Information beschrieben wird.

Gegebenenfalls können weitere Informationsträger wie Strichcodes oder RFID-Chips in dem Mehrschichtkörper vorgesehen sein, anhand derer alternativ oder ergänzend zu einer optisch variablen Vorrichtung zweite bzw. dritte und vierte Informationen bereitgestellt werden, die in einer solchen Beziehung zur durch die Kodierung bereitgestellten ersten Information stehen, dass das Sicherheitsmerkmal überprüft werden kann.

Gemäß der Erfindung umgibt ein Hintergrundbereich alle Informationsbereiche oder wenigstens alle erste Zonen vollständig. Auf diese Weise ist vermieden, dass ein Informationsbereich bzw. eine erste Zone sich an einem Rand befindet, wo er/sie möglicherweise leicht identifizierbar wäre. Auch ist durch den Hintergrundbereich dann für einen besonders guten Schutz des Informationsbereichs gesorgt. Ist der Mehrschichtkörper etwas größer als eine Eingabefläche des Auslesegeräts, kann durch einen etwas breiteren Randbereich, der als Hintergrundbereich ausgebildet ist, dafür gesorgt werden, dass der Mehrschichtkörper lediglich beliebig, insbesondere mit hoher Toleranz auf die Eingabeeinrichtung des Auslesegeräts aufgelegt werden muss und dass keine präzise Anleitung befolgt werden muss. Dies ist auch in den Fällen vorteilhaft, bei der das Auslesegerät auf den Mehrschichtkörper aufgelegt wird, beispielsweise bei einer größeren Verpackung.

Bei einer bevorzugten Ausführungsform gibt es genau einen Informationsbereich. Dieser kann eine einfache Form haben, deren Position und/oder Ausrichtung eine erste Information bereitstellt. Ein einziger Informationsbereich kann aber auch durch eine komplexe Form, etwa durch Ausbildung eines immer gleichen Grundbereichs, von dem sich gemäß einer Kodierung mehrere Teilbereiche wegerstrecken, bereitgestellt sein. Beispielsweise kann für den Informationsbereich eine Fläche vorgesehen sein, die drei unmittelbar untereinander angeordnete (insbesondere gleich lange) Streifen umfasst. Der mittlere Streifen entspricht dem genannten Grundbereich und ist als Ganzes von dem elektrisch leitfähigen Material (in einem der o. a. Muster) belegt. Die beiden streifenförmigen Bereiche neben dem mittleren Streifen sind in eine Anzahl von (insbesondere gleich großen) Teilflächen eingeteilt. Eine Kodierung erfolgt nun dadurch, dass jede der Teilflächen der benachbarten streifenförmigen Bereiche ein Bit kodiert, wobei eine Belegung des Teilbereichs mit elektrisch leitfähigem Material für eine logische Eins steht und eine Nichtbelegung mit elektrisch leitfähigem Material für eine logische Null steht. Z.B. lässt sich die Folge von Einsen und Nullen dadurch einfach ablesen, dass von links nach rechts zunächst die Belegung bzw. Nichtbelegung der Teilflächen im oberen streifenförmigen Bereich erfasst wird und daran anschließend die Belegung bzw. Nichtbelegung im unteren streifenförmigen Bereich erfasst wird.

Ein Informationsbereich kann bei einer bevorzugten Ausführungsform auch eine Mehrzahl von ersten Zonen umfassen, die durch zumindest eine Leiterbahn galvanisch miteinander gekoppelt sind. In diesem Falle wird durch die Gesamtheit der ersten Zonen eine Kodierung bereitgestellt, wobei deren Form, Größe, Ausrichtung und/oder Position bzw. auch Abstand voneinander die Kodierung bereitstellen können. Durch die galvanische Koppelung der ersten Zonen kann ein Effekt durch Auflegen des Mehrschichtkörpers auf das Auslesegerät erzielt werden, wie wenn mehrere Finger gleichzeitig mit ihren Fingerkuppen aufgelegt werden würden. Durch die mehreren Zonen ist auch der Vorteil erzielt, dass eine kodierte Information durch das Auslesegerät besonders unkompliziert auslesbar ist, da das Auslesegerät lediglich die relativen Positionen der einzelnen Zonen zueinander statt die absolute Position einer vorgegebenen einzelnen Zone zu erfassen braucht. Auf diese Art wird erreicht, dass eine Bedienperson den Mehrschichtkörper nicht exakt in einer möglichen Sollposition auf dem Auslesegerät platzieren muss und dennoch eine zuverlässige Auslesung gewährleistet ist.

Bei allen genannten Ausführungsformen ist als elektrisch leitfähiges Material zumindest eines aus der Gruppe von Silber, Kupfer, Gold, Aluminium, Chrom, Mischungen und/oder Legierungen der vorgenannten Materialien, einer leitfähigen Paste, Polyanilin und Polythiophen ausgewählt. Solche Materialien lassen sich besonders gut aufbringen und/oder besonders gut strukturieren. Beispielsweise kann eine Metallschicht in einer Schichtdicke von 10 nm bis 5 µm, bevorzugt 20 nm und 100 nm, auf den Träger oder eine Schicht, beispielsweise eine Reliefschicht bzw. Replizierschicht, aufgebracht und strukturiert werden. Das Aufbringen kann mittels Aufdampfens, Aufsputterns und eines sonstigen Aufbringungsverfahrens erfolgen. Eine Strukturierung erfolgt bevorzugt mittels mechanischen Entfernens, Laserablation, eines ÄtzVerfahrens oder mittels eines Waschverfahrens. Man spricht auch von Demetallisierung. Bevorzugt kann auch ein Verfahren des Druckens zum Strukturieren eingesetzt werden. Das Aufbringen und Strukturieren kann auch in einem einzigen Schritt erfolgen, z.B. wenn eine Aufbringungsmaske eingesetzt wird.

Bei einer bevorzugten Ausführungsform ist eine transparente oder transluzente, halb-transparente (semi-transparente) Deckschicht auf der Schicht mit dem elektrisch leitfähigen Material vorgesehen. Durch die transparente oder transluzente Deckschicht kann das elektrisch leitfähige Material geschützt werden und dennoch dafür gesorgt werden, dass der gewünschte Effekt der hohen Transparenz oder hoch-reflektierenden Eigenschaft aufrecht erhalten bleibt. Dies gilt auch bedingt für eine transluzente, semi-transparente Deckschicht.

Bisher wurden lediglich relative Proportionen zwischen den ersten Zonen und den zweiten Zonen genannt. Die absolute Größe der ersten Zonen ist davon abhängig, wie die Messfelder des Auslesegeräts eingerichtet sind. Im Hinblick auf zum Anmeldezeitpunkt gebräuchliche Messfeldgrößen sollte die zumindest eine erste Zone in einer Erstreckungsrichtung eine kleinste Abmessung von zwischen 2,5 mm bis 15 mm haben. Diese Abmessungen passen auch zu einem solchen Messfeld, das das Aufsetzen oder Sich-Annähern einer Fingerkuppe erfassen kann. Da zukünftig Messfelder immer kleiner werden, ist jedoch auch nicht ausgeschlossen, dass bei dem erfindungsgemäßen Mehrschichtkörper die zumindest eine Zone eine kleinste Abmessung vom zwischen 500 µm bis 2,5 mm hat. Insgesamt ist ein Bereich von 0,5 mm bis 40 mm sinnvoll.

Der erfindungsgemäße Gegenstand, der insbesondere eine Banknote, ein Scheck, ein Ausweisdokument, eine Fahr- oder Eintrittskarte, ein dem Fälschungsschutz kommerzieller Waren oder Produkte dienendes Element, eine Karte (z.B. eine Spiel-, Lotterie- oder für Werbezwecke dienende Karte) oder eine Verpackung (z.B. eine Aufbewahrungsbox für Einzelteile, ein CD-Case, eine Schachtel für Medizinprodukte, eine Gebinde für Flüssigkeiten, z.B. eine Weinflasche, ein (Kleidungs-)Anhänger, ein Preisschild usw.) ist, weist einen erfindungsgemäßen Mehrschichtkörper auf. Als Verpackung wird vorliegend eine vollständige Verpackung oder auch ein Teil einer vollständigen Verpackung angesehen. Bei den genannten Wertdokumenten oder Wertgegenständen ist es besonders wichtig, dass sie fälschungssicher sind, sodass aufgrund des erzielten insbesondere visuellen Effekts des homogen erscheinenden Mehrschichtkörpers, dem man nicht ansieht, dass durch die Informationsbereiche eine Information kodiert sein könnte, in besonderem Maße dafür gesorgt, dass das Sicherheitsmerkmal nicht ohne weiteres fälschbar ist. Die Erzielung eines verschleiernden Effekts auf die Informationsbereiche, d.h. deren visuelles Verbergen, kann auch durch eine entsprechende dekorative, insbesondere grafische Gestaltung erreicht werden, die nicht explizit die Funktion einer Fälschungssicherung hat. Eine solche entsprechend ausgeformte Gestaltung kann die Informationsbereiche wirksam visuell verstecken, ohne die kodierte Information zu beeinträchtigen.

Ist der Gegenstand ein Wertdokument wie eine Banknote, so ist bevorzugt der Mehrschichtkörper streifenförmig und auf einem Substrat der Banknote entweder aufgebracht (dann insbesondere als Laminat oder Heißprägefolie) oder in ein solches Substrat (dann als so genannter Sicherheitsfaden) eingebettet. Der Mehrschichtkörper kann auch patchförmig, d.h. in Form eines Labels oder Etiketts lediglich einen Teil des Banknoten-Substrats bedecken oder als das Banknoten-Substrat vollflächig bedeckendes Element vorgesehen sein.

Ist der Gegenstand eine Verpackung, so ist der Mehrschichtkörper vorzugsweise an einer Außenseite der Verpackung angebracht oder aufgebracht. Ebenso ist vorstellbar, dass der Mehrschichtkörper auf einem getrennten oder trennbaren Bestandteil der Verpackung aufgebracht ist.

Beispiele sind z.B. eine getrennt, lose beiliegende Karte oder eine abtrennbare Lasche an der Verpackung.

Das erfindungsgemäße Verfahren zum Herstellen eines Mehrschichtkörpers dient zum Herstellen eines Mehrschichtkörpers der oben beschriebenen erfindungsgemäßen Art und umfasst die Schritte:
- Bereitstellen und/oder Erfassen von Abmessungen von Messfeldern einer eine Annährung und/oder Berührung eines Eingabegegenstands kapazitiv erfassenden Eingabeeinrichtung
- Bereitstellen eines Informationsinhalts,
- Bereitstellen eines Trägers,
- Aufbringen von elektrisch leitfähigem Material in einer solchen Anordnung auf dem Träger, dass
   a) zumindest ein erster Informationsbereich bereitgestellt ist, der jeweils eine erste Zone aufweist, über deren Gesamtheit hinweg ihr elektrisch leitfähiges Material leitend verbunden ist, und wobei die Position, Größe, Form und/oder Ausrichtung der ersten Zonen und/oder ein Abstand zwischen mehreren ersten Zonen passend zu den Abmessungen der Messfelder gewählt ist, dass für ein (also im Hinblick auf) ein Auslesen mithilfe der Eingabeeinrichtung der Informationsinhalt kodiert wird, und dass
   b) in derselben Schicht wie der zumindest einen Informationsbereich zumindest ein Hintergrundbereich bereitgestellt ist, der eine Mehrzahl von zweiten Zonen aufweist, die galvanisch voneinander getrennt sind, so dass beim Auslesen des Informationsinhalts der ersten Zonen mithilfe der Eingabeeinrichtung der Hintergrundbereich von dem Informationsbereich so unterschieden wird, dass der Informationsinhalt der ersten Zonen erfasst wird.

Bei dem erfindungsgemäßen Verfahren wird somit zusätzlich ein neutraler Hintergrundbereich bereitgestellt, der keine durch kapazitive Auslesung erfassbare Information trägt. Er kann jedoch eine optische Information, insbesondere in Form eines dekorativen Elements und/oder in Form eines optischen Sicherheitsmerkmals wie z.B. diffraktiver oder refraktiver Strukturen bereitstellen. Durch das Bereitstellen eines Hintergrundbereichs ist das elektrisch leitfähige Material nicht nur in dem zumindest einen Informationsbereich vorgesehen, und dieses elektrisch leitfähige Material des Hintergrundbereichs kann dann dazu dienen, einen Betrachter von dem Informationsbereich abzulenken, idealerweise sogar wie bei der bevorzugten Ausführungsform des Mehrschichtkörpers für einen letztlich homogenen Eindruck des Mehrschichtkörpers zu sorgen.

Bevorzugt sind der zumindest eine Informationsbereich sowie der Hintergrundbereich voneinander derart unterschiedlich ausgebildet, dass der Informationsbereich beim Auslesen mithilfe der Eingabeeinrichtung zumindest vom Hintergrundbereich so unterschieden wird, dass der Informationsinhalt der ersten Zonen mit hoher Wahrscheinlichkeit korrekt erfasst wird. Beispielsweise können auch die zweiten Zonen des Hintergrundbereichs so ausgebildet sein, dass sie beim Auslesen erfasst werden, dabei jedoch die Erfassung des Informationsinhalts der ersten Zonen nicht wesentlich beeinträchtigen. Beispielsweise können die zweiten Zonen beim Auslesen zu einem Störsignal, Hintergrundsignal oder einem sogenannten Rauschen führen. Sie sind jedoch so ausgebildet, dass dieses Rauschen dennoch weiterhin die Erfassung des Informationsinhalts der ersten Zonen erlaubt. Hierzu können die zweiten Zonen insbesondere im Verhältnis zu den Abmessungen der Messfelder so klein ausgebildet sein, dass beim Auslesen des Informationsinhalts der ersten Zonen mithilfe der Eingabeeinrichtung der Hintergrundbereich von der Eingabeeinrichtung nicht erfasst wird.

Auf diese Weise ist eine hohe Fälschungssicherheit gewährleistet, denn für einen Fälscher ist erstens möglicherweise die Tatsache gar nicht erkennbar, dass eine Information in dem Informationsbereich kodiert ist; und selbst, wenn ein möglicher Fälscher dies weiß, erkennt er nicht unbedingt die Kodierung als solche anhand der Ausbildung des Informationsbereichs im Verhältnis zum Hintergrundbereich.

Bei einer bevorzugten Ausgestaltungsform ist das elektrisch leitfähige Material Metall, welches zunächst vollflächig aufgebracht und sodann bereichsweise entfernt wird. Ein Demetallisierungsverfahren wie beispielsweise mechanisches Entfernen, Ätzverfahren mittels Ätzresists, Waschmaskenverfahren mittels Waschlacke, Laserablation oder Belichtungsverfahren mittels Photoresist-Lacke, hat sich als besonders effizient erwiesen. Metall lässt sich auch besonders gut aufbringen, z.B. aufdampfen und hat den Vorteil, dass es Licht stark reflektiert. Beispielsweise kann das Metall auf eine, insbesondere in einer Lackschicht abgeformte Reliefstruktur aufgebracht werden, wodurch die dünne Metallschicht der Kontur der Reliefstruktur folgt und dadurch die Sichtbarkeit der Reliefstruktur als Reflexionsschicht in vorteilhafter Weise erhöht. Die Metallschicht kann nach dem vollflächigen Aufbringen wie oben beschrieben flächenbereichsweise demetallisiert, d.h. flächenbereichsweise entfernt werden.

Nachfolgend werden bevorzugte Ausführungsformen der Erfindung unter Bezug auf die Zeichnung näher beschrieben, in der
- Fig. 1: eine Draufsicht auf einen Mehrschichtkörper nach einer ersten Ausführungsform der Erfindung zeigt,
- Fig. 2a - 2d: eine Vergrößerung des in Fig. 1 mit II bezeichneten Ausschnitts gemäß unterschiedlichen Varianten veranschaulichen,
- Fig. 2e: einen Schnitt durch den Mehrschichtkörper nach Fig. 1 zeigt,
- Fig. 2f: einen Schnitt durch eine Transferfolie zur Bildung einer Variante des Mehrschichtkörpers nach Fig. 1 zeigt, und
- Fig. 2g: einen Schnitt durch diese Variante des Mehrschichtkörpers nach Fig. 1 zeigt
- Fig. 3: den in Fig. 1 mit III bezeichneten Ausschnitt in Vergrößerung in einer Variante passend zur Variante gemäß Fig. 2a zeigt,
- Fig. 4a: den in Fig. 1 mit IV bezeichneten Ausschnitt in Vergrößerung in der Variante passend zu Fig. 2a und Fig. 3 zeigt, und
- Fig. 4b: eine alternative Ausführungsform der Ausgestaltung nach Fig. 4a zeigt,
- Fig. 5: eine Draufsicht auf einen Mehrschichtkörper nach einer zweiten Ausführungsform der Erfindung zeigt,
- Fig. 6a: den in Fig. 5 mit VI bezeichneten Ausschnitt in Vergrößerung zeigt, und
- Fig. 6b: den in Fig. 5 mit VI bezeichneten Ausschnitt gemäß einer Variante in Vergrößerung zeigt,
- Fig. 7: den in Fig. 5 mit VII bezeichneten Ausschnitt in Vergrößerung zeigt,
- Fig. 8: den in Fig. 5 mit VIII bezeichneten Ausschnitt in Vergrößerung zeigt,
- Fig. 9: eine Draufsicht auf einen Mehrschichtkörper nach einer dritten Ausführungsform der Erfindung zeigt,
- Fig. 10: eine Abwandlung der dritten Ausführungsform des erfindungsgemäßen Mehrschichtkörpers in Draufsicht zeigt, welche ein Sicherheitselement bildet
- Fig. 11a: eine Banknote mit dem Sicherheitselement gemäß Fig. 10 in Draufsicht zeigt
- Fig. 11b: veranschaulicht, wie ein in der Banknote gemäß Fig. 11a enthaltener Code mithilfe eines Auslesegeräts ausgelesen werden kann und
- Fig. 12: eine Verpackung mit dem Sicherheitselement gemäß Fig. 10 in perspektivischer Ansicht zeigt.

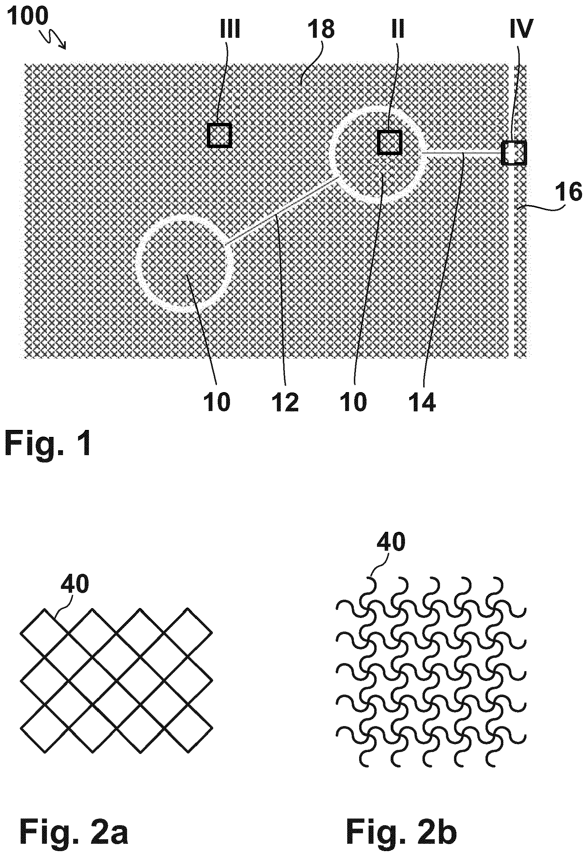

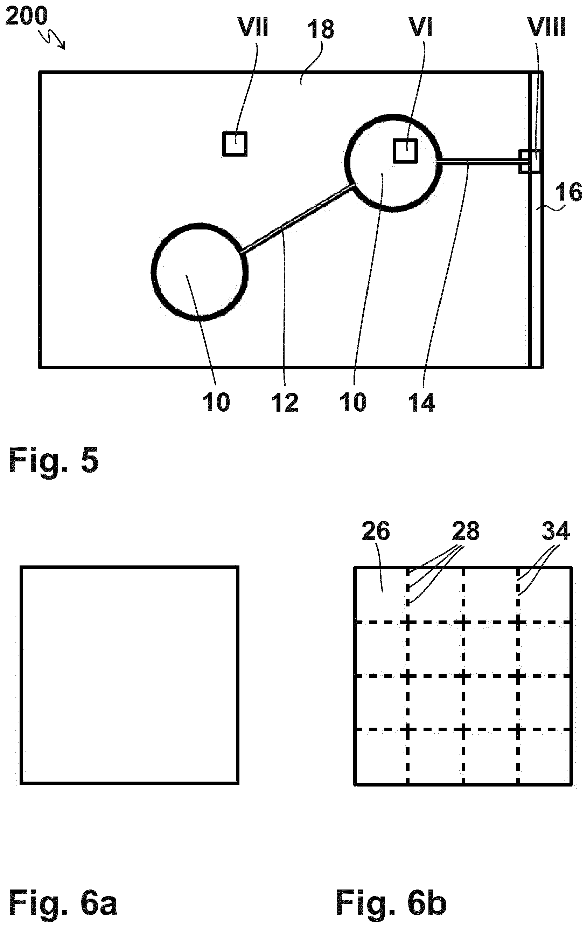

Ein Mehrschichtkörper, etwa in der Form einer mehrlagigen Folie, soll eine kapazitiv auslesbare Information tragen, ohne dass diese Information offensichtlich wird. Bei einer ersten Ausführungsform ist die Information deswegen nicht sichtbar, weil der Mehrschichtkörper insgesamt transparent wirkt. Diese Ausführungsform wird nachfolgend unter Bezug auf die Fig. 1 bis 4b beschrieben. Die erste Ausführungsform hat beispielsweise den Vorteil, dass ein unterhalb des Mehrschichtkörpers angeordnetes Substrat weiterhin sichtbar ist. Dieser Effekt kann beispielsweise in Banknoten oder im Verpackungsbereich vorteilhaft eingesetzt werden, so dass durch den transparenten Mehrschichtkörper hindurch weiterhin eine dekorative Oberflächengestaltung der Banknote bzw. der Verpackung für einen Betrachter sichtbar ist. Bei einer zweiten Ausführungsform ist die Information deswegen nicht sichtbar, weil der Mehrschichtkörper insgesamt das auftreffende Licht nahezu vollständig reflektiert. Diese zweite Ausführungsform ist nachfolgend unter Bezug auf die Fig. 5 bis 8 beschrieben. Der Aufbau beider Ausführungsformen kann in einem Mehrschichtkörper zugleich vorgesehen sein.

Auch eine dritte Ausführungsform, welche eine Zwischenstellung zwischen der ersten und der zweiten Ausführungsform einnimmt, ist verwirklichbar, hier aber nicht im Detail beschrieben. Es können also prinzipiell folgende drei Fälle unterschieden werden:
a) der Fall, bei dem die Transparenz so hoch ist (sehr geringe Flächenbelegung mit Metall), dass der Mehrschichtkörper quasi unsichtbar erscheint;
b) der Fall, bei dem die Transparenz so gering und die Reflektivität so hoch ist (hohe Flächenbelegung mit Metall), dass für einen Betrachter nur der Mehrschichtkörper und nicht das darunterliegende Substrat erkennbar ist; und
c) der Fall von Semitransparenz, bei dem die Transparenz vergleichsweise gering ist (Flächenbelegung mit Metall ca. 10% bis 30%), so dass das darunterliegende Substrat noch leicht zu sehen ist. Letzterer Fall ist häufig vorteilhaft, wenn der Mehrschichtkörper in Kombination mit einem optischen Sicherheitsmerkmal für den Fälschungsschutz Einsatz findet. Dabei ist die Flächenbelegung mit Metall so gewählt, dass das optische Sicherheitsmerkmal ausreichend brillant erscheint, weil eine ausreichende Metall-Fläche als Reflexionsschicht zur Verfügung steht und gleichzeitig durch das optische Sicherheitsmerkmal hindurch das Substrat weiterhin sichtbar ist.

Ein im Ganzen mit 100 bezeichneter Mehrschichtkörper gemäß der in Fig. 1 bis 4b veranschaulichten ersten Ausführungsform der Erfindung umfasst einen Informationsbereich, der zwei vorliegend kreisförmige erste Zonen 10 umfasst, die durch eine Verbindungsleitung 12 miteinander verbunden sind. Eine Verbindungsleitung 14 führt zu einem Randbereich 16, wo ein elektrischer Anschluss der ersten Zonen 10 erfolgen kann. Beispielsweise kann eine Bedienperson den Mehrschichtkörper in dem Randbereich 16 festhalten und auf diese Art erden.

In dem Informationsbereich ist elektrisch leitfähiges Material vorgesehen, das über den gesamten Informationsbereich leitend verbunden ist. Wird der Mehrschichtkörper 100 auf ein Tastfeld aufgelegt, das die Annährung eines Eingabegegenstands (wie etwa eines Benutzerfingers) kapazitiv erfasst, dann wirken die ersten Zonen 10 bei vergleichbarer Größe wie Fingerkuppen eines Benutzerfingers. Hierbei ist es vorteilhaft, wenn der Mehrschichtkörper 100 im Randbereich 16 durch eine Bedienperson berührt wird und auf diese Art mit dieser elektrisch leitend verbunden ist. Auf diese Art wird eine kapazitive Funktionalität der ersten Zonen 10 sichergestellt. Durch die Lage der ersten Zonen 10 auf dem Mehrschichtkörper 100, ihre Beabstandung und ggf. absolute Größe wird vorliegend eine Information kodiert, die im Zusammenwirken mit einem aktiven Anwenderprogramm (z.B. Applet) in dem Auslesegerät mit dem entsprechenden Tastfeld erfasst und angezeigt wird. Mittels des Anwenderprogramms wird die kodierte Information erfasst und eine geeignete hinterlegte Aktion ausgeführt.

Vorzugsweise besitzen die kreisförmigen ersten Zonen 10 einen Durchmesser von wenigstens 5 mm und maximal 15 mm. Besonders bevorzugt ist hierbei ein Durchmesser von zwischen 7 mm und 10 mm. Auf diese Art kann eine sichere Detektion erfolgen. Weiterhin bevorzugt ist ein Mindestabstand von 4 mm zweier Zonen 10 zueinander. Besonders bevorzugt beträgt der Mindestabstand 6 mm, ganz besonders bevorzugt jedoch 8 mm. Der Mindestabstand bemisst sich dabei als kürzeste Rand-zu-Rand-Verbindung zweier benachbarter Zonen 10. Weiterhin bevorzugt ist es, dass die Zuleitungen 12 und/oder 14 eine maximale Leiterbahnbreite aufweisen, wobei diese dann bevorzugt maximal 1 mm, besonders bevorzugt jedoch 500 µm, beträgt. Auf diese Art ist sichergestellt, dass potentiell durch die Zuleitungen 12 und 14 ausgelöste Störsignale gering gehalten sind und die sichere Erfassung der Zonen 10 nicht beeinträchtigen.

Die Fig. 1 zeigt genau zwei Zonen 10, welche gemeinsam über die Zuleitungen 12 und 14 mit dem Randbereich 16 galvanisch gekoppelt sind. Dies ist auch eine ganz besonders bevorzugte Ausführungsform. Bevorzugt sind nicht mehr als drei Zonen 10 über Zuleitungen 12 bzw. 14 galvanisch miteinander sowie mit dem Randbereich 16 verbunden. Auf diese Art ist eine eindeutige räumliche Unterscheidung der Zonen 10 im resultierenden Detektionssignal gewährleistet.

Die Zuleitung 14 der Fig. 1 verläuft senkrecht zur Erstreckungsrichtung des Randbereichs 16, während die Zuleitung 12 diagonal bzw. schräg zum Randbereich 16 verläuft. Als besonders bevorzugt haben sich solche Zuleitungen 12 bzw. 14 erwiesen, die senkrecht oder parallel zur Erstreckungsrichtung des Randbereichs 16 verlaufen.

Der Informationsbereich mit den ersten Zonen 10 und den Verbindungsleitungen 12 und 14 sowie dem Randbereich 16 ist von einem Hintergrundbereich 18 umgeben, in dem keine durchgehende elektrische Leitfähigkeit gegeben ist. Die Rolle des Hintergrundbereichs 18 besteht darin, ebenfalls elektrisch leitfähiges Material bereitzustellen, das das selbe Erscheinungsbild bzw. dieselbe optische Wirkung hat wie elektrisch leitfähiges Material in den ersten Zonen 10 und den Verbindungsleitungen 12 und 14 sowie dem Randbereich 16.

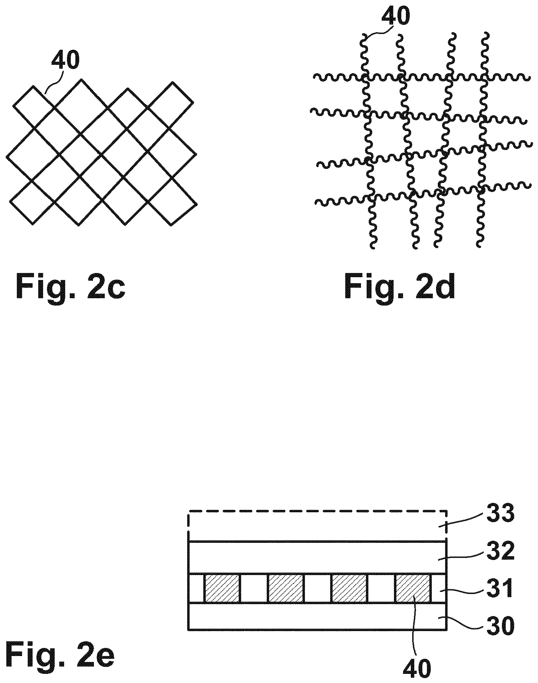

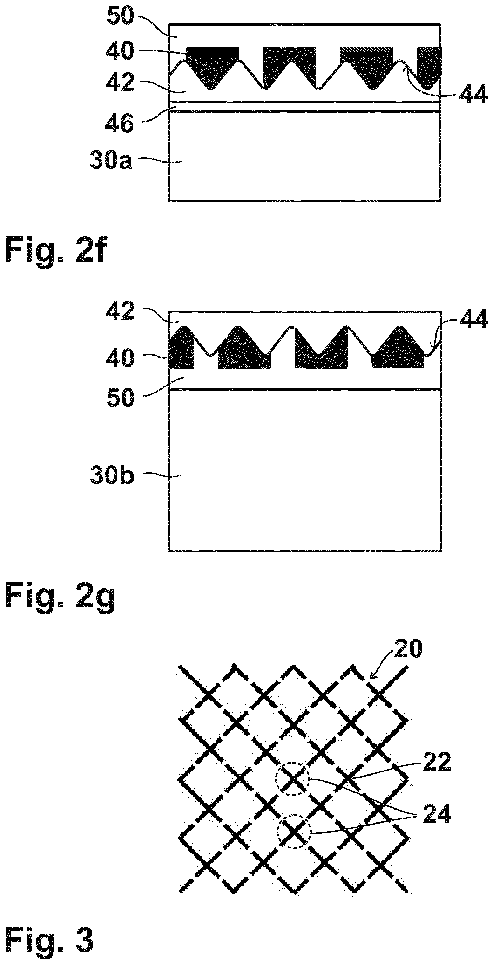

Der Unterschied zwischen dem Informationsbereich und dem Hintergrundbereich wird nachfolgend anhand der Fig. 2a bis 2g und Fig. 3 sowie Fig. 4a und 4b erläutert:
Damit der Mehrschichtkörper 100 insgesamt transparent wirkt, ist im Bereich der ersten Zonen 10 elektrisch leitfähiges Material in Form von Leiterbahnen 40 bereitgestellt, die mikroskopisch klein sind, sodass sie einzeln mit dem menschlichen Auge nicht aufgelöst werden können. Die Leiterbahnen 40 haben insbesondere eine Dicke aus dem Bereich von 1 µm bis 40 µm, bevorzugt aus dem Bereich von 5 µm bis 25 µm. Fig. 2a zeigt ein regelmäßiges Muster von sich überkreuzenden Leiterbahnen 40. Fig. 2b zeigt ein regelmäßiges Muster von wellenförmigen Leiterbahnen 40. Diese Muster haben den Vorteil, dass sie sehr leicht in einer nahezu endlosen Folge erzeugbar sind. Zur Unterbindung von Beugungs- und Moire-Effekten sind die Verbindungsleitungen möglichst nicht parallel zueinander angeordnet. Hier zeigt Fig. 2c eine Variante des Musters aus 2a, bei dem stochastische Abweichungen in den das Muster beschreibenden Parametern lokal unterschiedlich vorgesehen werden, sodass die einzelnen Leiterbahnen 40 nicht parallel zueinander verlaufen. Ähnlich ist das Muster aus Fig. 2d eine Variante des Musters aus Fig. 2b. Moire-Effekte können beispielsweise durch die Überlagerung eines gleichmäßigen Rasters der metallischen Leiterbahnen des Mehrschichtkörpers mit einem ebenfalls gleichmäßigen Druckraster auf einem darunterliegenden Substrat entstehen.

Den Mustern aus Fig. 2a bis 2d ist gemeinsam, dass es eine Vielzahl von Kreuzungspunkten zwischen den einzelnen Leiterbahnen gibt, damit eine möglichst gleichmäßige Flächenleitfähigkeit bereitgestellt ist.

Wie anhand Fig. 2e ersichtlich, sind die elektrisch leitfähigen Bahnen 40 insbesondere auf eine Trägerfolie 30 aufgebracht. Diese ist vorzugsweise eine flexiblen Kunststofffolie, beispielsweise aus Polyethylenterephthalat (PET), Polyethylen (PE), Polypropylen (PP), Polyvinylchlorid (PVC), Polystyrol (PS), Polyester und/oder Polycarbonat (PC). Diese flexible Kunststofffolie weist vorzugsweise Schichtdicken von zwischen 5 µm und 300 µm auf, besonders bevorzugt von zwischen 23 µm und 100 µm. Die Trägerfolie 30 ist transparent ausgebildet.

Die elektrisch leitfähige Schicht 31 stellt die Leiterbahnen 40 bereit und besteht vorzugsweise aus einem Metall, beispielsweise Kupfer, Aluminium, Chrom, Silber oder Gold. Diese Metallschicht ist bevorzugt vollflächig in einer Schichtdicke von zwischen 10 nm und 5 µm, bevorzugt 20 nm und 100 nm, auf die Trägerfolie 30 aufgebracht, insbesondere aufgedampft und strukturiert (sog. Demetallisieren). Alternativ kann die Metallschicht auch strukturiert auf die Trägerfolie 30 in Form eines metallischen Lacks oder einer leitfähigen Paste aufgebracht, insbesondere aufgedruckt werden.

Zwischen der Trägerfolie 30 und der elektrisch leitfähigen Schicht 31 kann auch eine Haftvermittlungsschicht angeordnet sein, welche das Anhaften der elektrisch leitfähigen Schicht 31 an der Trägerfolie 30 verbessert. Eine derartige Haftvermittlungsschicht sollte dann ebenfalls aus einem transparenten Material ausgebildet sein, beispielsweise aus einem transparenten Lack.

Auf der ersten elektrisch leitfähigen Schicht 31 wird ferner eine dielektrische Schicht 32 aufgebracht, die die Funktion einer Deckschicht hat. Bei der dielektrischen Schicht 32 handelt es sich vorzugsweise um einen transparenten Lack, der mittels eines Druckverfahrens in einer Schichtdicke von 1µm bis 40µm auf die elektrisch leitfähige Schicht 31 aufgebracht wird. Optional kann auf die dielektrische Schicht 32 noch eine weitere elektrisch leitfähige Schicht 33 aufgebracht werden. Diese kann mittels Druckens eines elektrisch leitfähigen Druckstoffes, beispielsweise Carbon-Black oder Leitsilber aufgebracht werden.

Die elektrisch leitenden Bahnen 40 können alternativ auf einer Lackschicht 42 aufgebracht sein. Die Lackschicht ist vorzugsweise mit einer Reliefstruktur 44 versehen, wobei die dünne Schicht der elektrisch leitenden Bahnen 40 dieser Reliefstruktur folgt. Auf die elektrisch leitenden Bahnen 40 können weitere Lackschichten aufgebracht sein. Der Mehrschichtkörper kann in Form einer Transferfolie vorliegen, welche eine Trägerfolie 30a umfasst, von der eine Transferlage 48 ablösbar ist. Um die Ablösbarkeit hervorzurufen, ist die Transferlage 48 von der Trägerfolie 30a über eine Ablöseschicht 46 getrennt.

Im vorliegenden Beispiel umfasst die Transferlage 48 die Lackschicht 42 mit der Reliefstruktur, die elektrisch leitenden Bahnen 40 und eine Kleberschicht 46 auf den elektrisch leitfähigen Bahnen.

Die Transferfolie kann als Heißprägefolie oder Kaltprägefolie ausgebildet sein. Zum Transfer der Transferlage 48 wird die Transferfolie mit der Seite der Kleberschicht 50 an bzw. auf ein Substrat 30b in Kontakt gebracht. Das Substrat 30b kann z.B. aus Papier bestehen (Banknote, Karton oder Ticket). Beim Vorgang des Prägens löst sich die Transferlage zumindest in den von erhabenen Bereichen des Prägewerkzeugs beaufschlagten Bereich wegen des Vorhandenseins der Ablöseschicht 46 von der Trägerfolie 30a. Gegebenenfalls wird hierbei der Klebstoff durch Wärme oder Ultraviolett-Strahlung aktiviert, sodass die Transferlage mit der Kleberschicht 50 an dem Substrat 30b haftet. Die elektrischen Leiterbahnen 40 sollen in den ersten Zonen 10 durchgehend leitend sein, damit eben in dem Informationsbereich alle Teile der elektrisch leitfähigen Schicht 31 galvanisch miteinander verbunden sind. Anders soll es in dem Hintergrundbereich 18 sein. Der in Fig. 3 gezeigte vergrößerte Ausschnitt III aus Fig. 1 zeigt die Situation für die Variante mit den regelmäßigen Leiterbahnen gemäß Fig. 2a. Wenn im Ausschnitt II die Leiterbahn wie in Fig. 2a gezeigt vorgesehen sind, wird im Ausschnitt III das entsprechende Leiterbahnmuster fortgesetzt, es gibt aber regelmäßige Unterbrechungen (Spalte) 20 in dem Leiterbahnmuster, sodass man es nur noch mit Leiterbahnteilen 22, welche kreuzförmig sind, zu tun hat. Man hat es daher nur noch mit kleinsten durchgängig leitenden Einheiten zu tun, die in Fig. 3 mit 24 bezeichnet sind und nachfolgend als zweite Zonen bezeichnet werden.

Die kreuzförmige Ausbildung der Leiterbahnteile 22 ist nur beispielhaft. Die Unterbrechungen (Spalte) 20 können auch in beliebigen anderen Mustern regelmäßig oder unregelmäßig in den Leiterbahnen ausgebildet sein. Beispielsweise können die Unterbrechungen auch an den Kreuzungspunkten der Leiterbahnen in Fig. 3 vorgesehen sein (anstatt zwischen den Kreuzungspunkten). Es kann auch ein separates Demetallisierungsmuster dem Leiterbahnmuster überlagert sein.

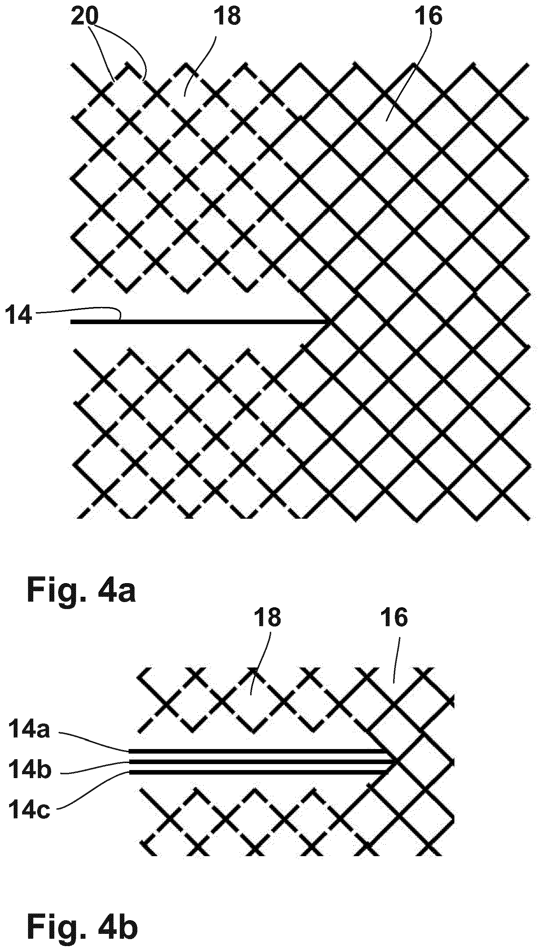

Im in Fig. 4a gezeigten Übergangsbereich zwischen dem Informationsbereich und dem Hintergrundbereich (siehe Ausschnitt IV in Fig. 1), erkennt man, dass dasselbe Muster der Leiterbahnen sowohl im Informationsbereich als auch im Hintergrundbereich zugrunde liegt, und nur durch die Unterbrechungen 20 ist die galvanische Trennung der einzelnen zweiten Zonen 24 gegeben, wohingegen der gesamte Informationsbereich durchgehend leitend ist.

Anstelle der einzelnen Leiterbahn 14, die in Fig. 4a gezeigt ist, können auch mehrere Leiterbahnen vorgesehen sein, siehe die drei in Fig. 4b gezeigten Leiterbahnen 14a, 14b und 14c. Bei Beschädigung und Unterbrechung einer der Leiterbahnen, z.B. der Leiterbahn 14b, ist dann durch die verbleibenden beiden Leiterbahnen, z.B. 14a und 14c, weiterhin aufgrund von Redundanz der elektrische Anschluss des Randbereichs 16 gewährleistet. Die Leiterbahnen 14a bis 14c sind hinsichtlich ihrer Beabstandung nur beispielhaft dargestellt. Ihr Abstand zueinander kann insbesondere auch erheblich größer sein.

Der Mehrschichtkörper 100 aus den Figuren 1 bis 4b ist insgesamt transparent, weil die Trägerfolie 30 und die dielektrische Schicht 32 transparent, die Leiterbahnen durch das menschliche Auge nicht einzeln auflösbar und die Leiterbahnen ausreichend voneinander beabstandet sind, so dass eine geringe Flächenbelegung mit Leiterbahnen realisiert ist. Dadurch, dass sich der Hintergrundbereich 18 im wesentlichen nahezu unmittelbar, lediglich durch einen kleinen Spalt mit Abmessungen von höchstens 150 µm von dem Informationsbereich getrennt, an den Informationsbereich anschließt und durch ein ähnliches Muster bereitgestellt ist, variiert die Transparenz (insbesondere Transmissivität) des gesamten Mehrschichtkörpers 100 über seine Fläche hinweg kaum. Wählt man beispielsweise bei einem Abstand der Leiterbahnen 40 von 40 µm eine Fläche von 200 µm mal 200 µm, um jeweils eine mittlere Flächenbelegung zu ermitteln, dann variiert diese mittlere Flächenbelegung ausgehend von einem Grundwert über den gesamten Mehrschichtkörper 100 lediglich um höchstens 25%.

Bei der zweiten Ausführungsform des Mehrschichtkörpers soll der Effekt erzielt werden, dass dieser metallisch glänzt. Hier wird daher gerade besonders großflächig Metall vorgesehen, und im Schichtaufbau gemäß Fig. 2e wird anstelle der Leiterbahnen 40 eine durchgängige Metallschicht aus einem der oben genannten Metalle bereitgestellt, die lediglich bereichsweise unterbrochen ist.

Die Fig. 5 zeigt eine Draufsicht auf eine solche zweite Ausführungsform des Mehrschichtkörpers 200 bei gleicher Geometrie wie beim Mehrschichtkörper 100. Hierbei sind aus Gründen der Darstellbarkeit metallisierte Bereiche weißflächig dargestellt, und nicht metallisierte Bereich in schwarz. Diese invertierte Darstellung ist auch in den Figuren 6a, 6b, 7, 8, 9, 10 und 11a (nicht jedoch 11b) sowie 12 gewählt.

Fig. 6a zeigt die Ausbildung in einem in Fig. 5 mit VI gekennzeichneten Bereich einer ersten Zone: Hier ist durchgehend Metall in dem vorliegend quadratischen Ausschnitt vorgesehen, in der ersten Zone gibt es also keine Unterbrechungen. Bei der Variante gemäß Fig. 6b ist in der ersten Zone 10 in jeweiligen vorliegend quadratischen Teilbereichen 26 vollflächig Metall vorgesehen, dazwischen gibt es eine Folge aus Unterbrechungen 28 mit leitenden (metallischen) Stegen 34 dazwischen.

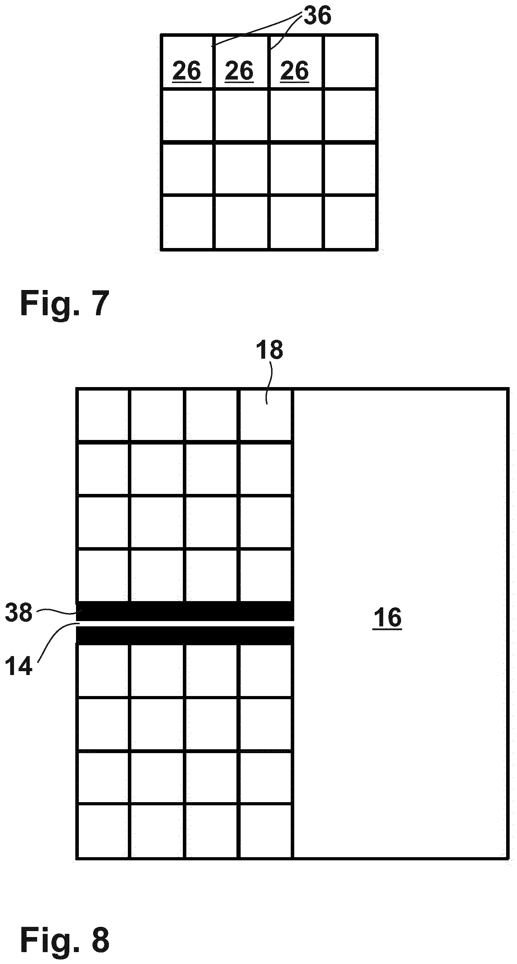

Im Hintergrundbereich 18 in einem in Fig. 5 mit VII gekennzeichneten Bereich ist nun das in Fig. 7 gezeigte Muster vorgesehen: Dort gibt es zweite Zonen 26, die quadratisch sind und durch durchgehende Abtrennungen 36 voneinander getrennt sind.

Auf diese Art ist sichergestellt, dass die Bereiche VI und VII für einen Betrachter optisch gleichartig erscheinen.

Die Abtrennungen 36 beinhalten insbesondere eine vollständige Unterbrechung der metallischen Schicht, was etwa durch entsprechendes Strukturieren der Metallschicht mittels bekannter Strukturierungsverfahren, z.B. Ätzverfahren oder Waschlackverfahren oder Laserablation oder mechanisches Entfernen oder Belichtungsverfahren hervorgerufen werden kann. Es handelt sich hierbei um Spalte, die für das menschliche Auge nicht auflösbar sind und beispielsweise eine Breite aus dem Bereich von 1 µm bis 40 µm, bevorzugt aus dem Bereich von 5 µm bis 25 µm, haben können.

Anhand der Fig. 7 wird der Sinn der Ausführungsform gemäß Fig. 6b ersichtlich: Das regelmäßige Muster im Hintergrundbereich setzt sich in gewisser Hinsicht auch im Informationsbereich fort, damit der Mehrschichtkörper 200 insgesamt einheitlich wirkt. Je nach Größe der Unterbrechungen bzw. Spalte 36 kann derselbe Effekt jedoch auch bei der Variante aus Fig. 6a erzielt werden. Entscheidend ist hier wiederum die Flächenbelegung, definiert als die mit Metall belegte Fläche innerhalb eines vorgebbaren Flächenbereichs der Gesamtfläche A dividiert durch diese Gesamtfläche A. Diese Flächenbelegung ist im Hintergrundbereich und im Informationsbereich im Wesentlichen dieselbe, damit der gleichartige optische Eindruck erzielt ist.

In Fig. 8 ist passend zu Fig. 7 und zur Variante gemäß Fig. 6a der Ausschnitt VIII aus Fig. 5 vergrößert gezeigt. Die in Fig. 8 in der Kontrastumkehr weiß gezeigte Leiterbahn 14 verbindet den vollflächigen Kontaktierungsbereich 16 am Rande des Mehrschichtkörpers 200 mit den beiden ersten Zonen 10. Zwischen der Leiterbahn 14 und dem Hintergrundbereich 18 befindet sich ein Spalt 38, der eine Breite von höchstens 150 µm aufweist und daher für das menschliche Auge nicht sichtbar ist.

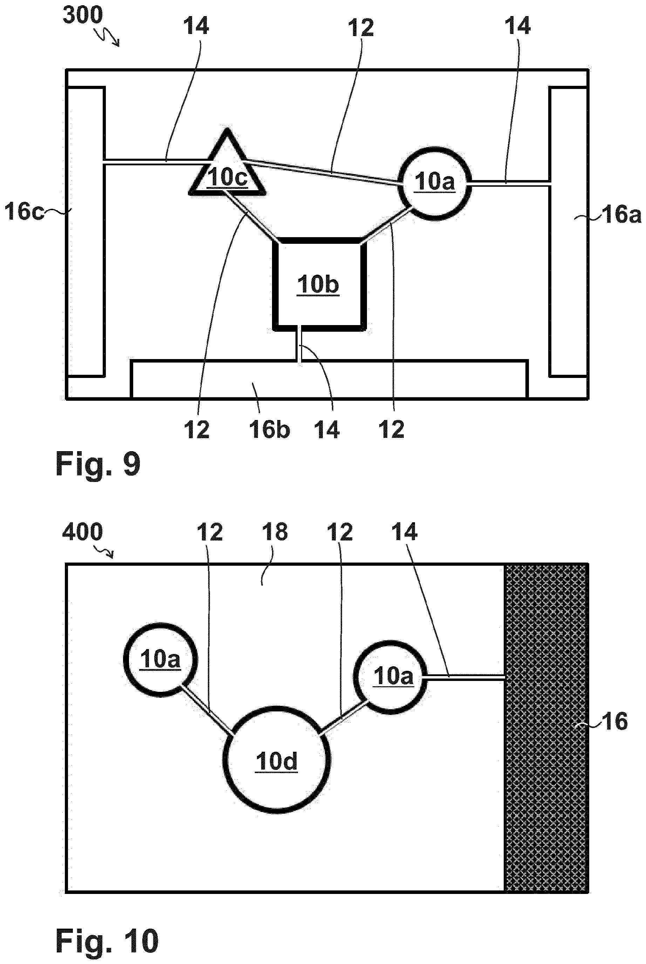

Durch die Variation von Größe und Muster der ersten Zonen 10 können komplexere Informationen in dem Mehrschichtkörper kodiert werden. Dies wird nachfolgend anhand des Mehrschichtkörpers 300 aus Fig. 9 ersichtlich, wo als erste Zone eine kreisförmige Zone 10a, eine quadratische Zone 10b und eine dreieckförmige Zone 10c zu sehen sind, die durch Verbindungsleitungen 12 galvanisch miteinander gekoppelt sind und durch Verbindungsleitungen 14 mit jeweiligen leitenden Randbereichen 16a, 16b, 16c verbunden sind.

Im Ausführungsbeispiel der Fig. 9 sind alle Randbereiche 16a, 16b und 16c mit allen Zonen 10a, 10b und 10c galvanisch gekoppelt. Alternativ kann jedoch auch vorgesehen sein, die jeweiligen Randbereiche 16a, 16b und/oder 16c lediglich mit einer Teilmenge der Zonen 10a, 10b und 10c galvanisch zu verbinden. Beispielsweise kann vorgesehen sein, dass der linke Randbereich 16c ausschließlich mit der Zone 10c über eine Leiterbahn 14 elektrisch verbunden ist und keine galvanische Kopplung mit der Zone 10a und 10b aufweist. Dann kann ferner vorgesehen sein, dass die Zonen 10a und 10b über eine Verbindungsleitung 12 galvanisch miteinander und darüber hinaus mit dem unteren Randbereich 16b sowie dem rechten Randbereich 16a gekoppelt sind. Hält ein Benutzer den Mehrschichtkörper 300 lediglich im linken Randbereich 16a fest, ist ausschließlich ein erster Informationsbereich, gebildet durch die Zone 10c, kapazitiv aktiv. Hält er dagegen den Mehrschichtkörper 300 lediglich im unteren Randbereich 16b und/oder rechten Randbereich 16a fest, ist nur ein zweiter Informationsbereich, gebildet durch die Zonen 10a und 10b aktiv. Auf diese Art kann ein Mehrschichtkörper 300 bereitgestellt werden, der je nachdem, in welchem Randbereich er von dem Benutzer festgehalten wird, eine unterschiedliche Information vermittels der jeweils aktiven Informationsbereiche bereitstellt.

In Abwandlung des Ausführungsbeispiels gemäß der Fig. 9 kann vorgesehen sein, dass alle ersten Zonen rechteckförmig, bevorzugt quadratisch ausgebildet sind. Hierbei ist es besonders bevorzugt, wenn die Kanten der Rechtecke bzw. Quadrate parallel oder senkrecht zu der Erstreckungsrichtung der Randbereiche 16a, 16b, 16c verlaufen, die insbesondere gleich der Verlaufsrichtung der jeweiligen Randkante ist. Dann ist es möglich, den Mehrschichtkörper (auf einem Objekt wie etwa einer Karte befindlich) entsprechend zu einem Auslesegerät auszurichten. Dies gilt insbesondere dann, wenn es sich um ein Auslesegerät mit einer Tastfeldfunktionalität handelt, welches so genannte Sensorzellen aufweist, die ihrerseits rechteckig oder quadratisch sind. Sofern das Auslesegerät vorab feststeht, kann die Form der ersten Zonen 10 passend zu den Sensorzellen desselben ausgewählt sein.

Weiterhin ist es besonders bevorzugt, wenn die in Fig. 9 dargestellten Zuleitungen 12 entfallen und nur die Zuleitungen 14 vorhanden sind. Dann ist jede der Zonen 10a, 10b und 10c mit genau einem Randbereich, nämlich den Randbereichen 16a bzw. 16b bzw. 16c, galvanisch verbunden. Es erweist sich dann als vorteilhaft, dass alle Zuleitungen 14 im rechten Winkel zur Erstreckungsrichtung der zugehörigen Randbereiche 16 verlaufen.

Genauso zeigt Fig. 10 in einem Mehrschichtkörper 400 eine Mehrzahl von ersten Zonen 10a in Kreisform einer ersten Größe und 10d einer zweiten Größe, die durch Verbindungsleitungen 12 miteinander verbunden sind und über eine Verbindungsleitung 14 mit einem Randbereich 16 verbunden sind. Wir haben es vorliegend insbesondere mit einer Mischgestaltung der beiden Ausführungsformen gemäß Fig. 1 bis 4b einerseits und Fig. 5 bis 8 andererseits zu tun: Während der in Fig. 10 gezeigte größere Anteil des Mehrschichtkörpers 400 reflektierend ausgebildet und daher wie anhand der Figuren 5 bis 8 erläutert ausgebildet ist, ist der Randbereich 16 transparent ausgebildet und hat die Eigenschaften wie oben anhand der Fig. 4a/b erläutert.

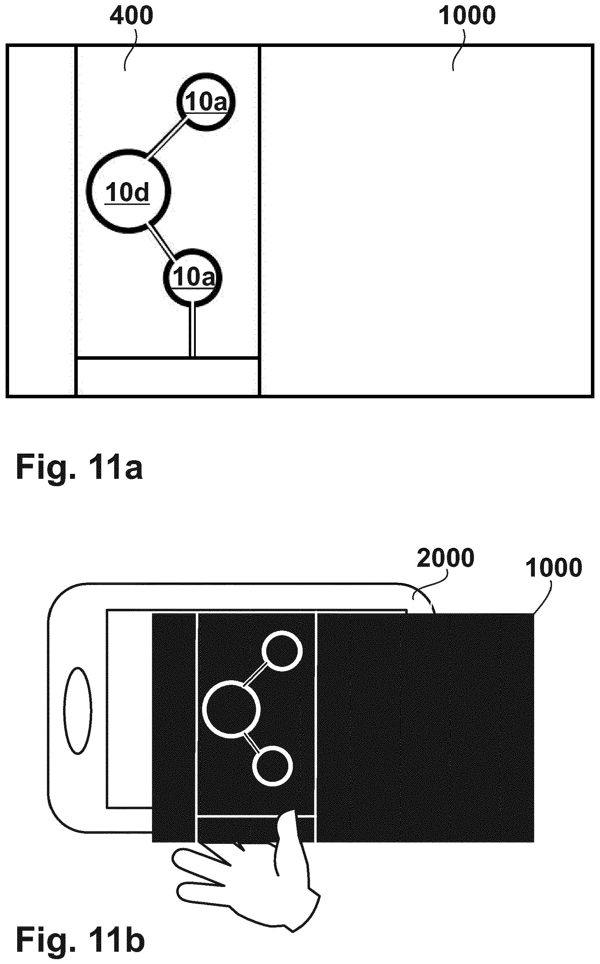

Der Mehrschichtkörper 400 aus Fig. 10 kann insbesondere streifenförmig sein und als Sicherheitsstreifen auf einem Wertdokument wie etwa einer Banknote 1000 (siehe Fig. 11a), einer Fahrkarte, einem Ticket oder einer Eintrittskarte angeordnet sein. Die durch die ersten Zonen 10a und 10d bereitgestellte Kodierung ist dadurch auslesbar, dass die Banknote 1000 auf ein Auslesegerät 2000, vorliegend gezeigt in Form eines Smartphones, aufgelegt wird. Ein Benutzer fasst die Banknote hierbei am Randbereich 16 fest, der nicht selbst auf den Messfeldern des Tastfeldes des Smartphones aufliegt. Lediglich die ersten Zonen 10a und 10d liegen auf dem Tastfeld auf. In dem Smartphone 2000 ist ein Anwenderprogramm (Applet) in der Lage, eine kapazitive Wechselwirkung zwischen den ersten Zonen 10a, 10d und den Messfeldern zu erfassen, sodass die Wirkung erzielt wird, als ob durch Benutzerfinger eine Berührung an entsprechenden Teilflächen erfolgen würde. Genauso, wie man durch die Berührung bestimmter Flächen eine Information eingeben kann, wird also vorliegend eine Information auslesbar durch das Auflegen der Banknote 1000.

Die Ausführungsform der Fig. 10 zeigt drei Zonen 10, welche über teilweise diagonal verlaufende Zuleitungen 12 mit dem Randbereich 16 galvanisch verbunden sind. Gemäß dem oben Ausgeführten ist hier eine analoge Ausführungsform besonders bevorzugt, bei der lediglich zwei Zonen, z.B. die Zonen 10a und 10d, vorhanden sind, und über eine Zuleitung 12 so miteinander verbunden sind, dass diese Zuleitung 12 senkrecht oder parallel zur Erstreckungsrichtung des Randbereichs 16 verläuft. Bevorzugt hat diese Zuleitung 12 sowie die Zuleitung 14 eine Breite von maximal 1 mm. Die Zonen 10a und 10d sind dann weiterhin bevorzugt wenigstens 4 mm voneinander beabstandet. Im Fall der dargestellten kreisrunden Form der Zonen 10a und 10d haben diese dann bevorzugt jeweils einen Durchmesser von wenigstens 5 mm, so dass der Abstand der Zonen 10a und 10d - nunmehr bezogen auf ihren Kreismittelpunkt - wenigstens 9 mm beträgt.

Die Kreisform der ersten Zonen etwa gemäß Fig. 10 hat den Vorteil, dass der Mehrschichtkörper mit solchen kreisförmigen ersten Zonen 10 unter beliebigem Winkel zu einem Auslesegerät stehen kann und nicht an dessen Sensorzellen ausgerichtet werden muss. Man nimmt dann allerdings kleinere Signalhöhen ggf. in Kauf.

Im Falle der Banknote 1000 erfüllt der Mehrschichtkörper 400 in Form eines Folienelements zwei Hauptfunktionen:
a) die kapazitiv kodierte Information kann beispielsweise den Nennwert der Banknote, das Ausgabedatum oder das Ausgabeland umfassen; und
b) mittels der Authentifizierung wird angezeigt, dass das Sicherheitselement präsent und authentisch ist. Diese Funktionen sind besonders für Blinde und Sehbehinderte von großem Nutzen, da sie ihnen erlauben, im täglichen Leben Geldscheine zu identifizieren und auf ihre Echtheit zu überprüfen.

Insbesondere bei der Ausführungsform gemäß Fig. 5 bis Fig. 8 gibt es größere metallische Flächen, die mit einer Oberflächenreliefstruktur versehen werden können, durch welche insbesondere eine optisch variable Vorrichtung bereitgestellt werden kann. Eine solche optisch variable Vorrichtung zeigt eine visuelle zweite Information, die die durch die ersten Zonen bereitgestellte bzw. kodierte Information ergänzen kann. So kann beispielsweise bei der Banknote 1000 aus Fig. 11a eine optisch variable Vorrichtung auf dem Mehrschichtkörper 400 vorgesehen sein, die als Bild eine Zahl zeigt, wobei die kodierte Information ebenfalls durch das Anwenderprogramm als Zahl wiedergegeben wird. Stimmen die angezeigte Zahl und die ausgegebene Zahl überein, dann kann man sich sicher sein, dass keine Fälschung der Banknote 1000 vorliegt. Anstelle einer Zahl können auch grafische Motive oder grafische Motivteile, einzelne Wortteile, ganze Wörter, Satzteile oder ganze Sätze wiedergegeben sein. Die erste und die zweite Information müssen auch nicht notwendigerweise übereinstimmen, sondern können sich auch ergänzen. So kann es beispielsweise sein, dass das Anwenderprogramm bewirkt, dass bei Auflegen der Banknote 1000 mit dem Mehrschichtkörper 400 auf das Smartphone 2000 eine bestimmte Internetadresse aufgerufen wird, auf der das Bild hinterlegt ist, das auch die optisch variable Vorrichtung zeigt. Auf diese Weise kann für eine besonders hohe Fälschungssicherheit gesorgt werden.

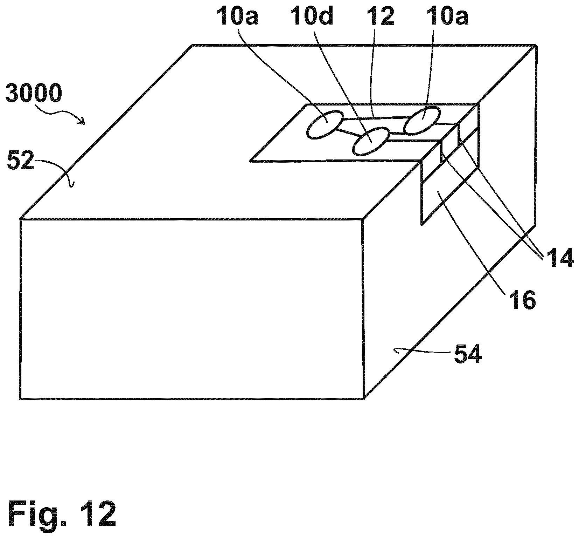

Bei der in Fig. 12 gezeigten Verpackung 3000, die etwa zur Aufnahme von wertvollen Medikamenten oder sonstigen pharmazeutischen Produkten, oder auch Rauchwaren dient, ist der Mehrschichtkörper 400 aus Fig. 10 über Eck aufgeklebt. Dadurch ist es möglich, ein in Fig. 12 nicht gezeigtes Smartphone auf die Oberseite 52 der Verpackung 3000 aufzulegen, wo die ersten Zonen 10a und 10d bereitgestellt sind. Währenddessen kann der Benutzer den Randbereich 16 an der Seitenwand 54 berühren und dadurch die ersten Zonen 10a und zweiten Zonen 10d (und so den Informationsbereich insgesamt) erden.

Wie schon zu Fig. 11b ausgeführt, kann der Mehrschichtkörper 400 Informationen kodieren, etwa eine einem Strichcode entsprechende Information (zur Produktidentifikation), ein Herstellungsdatum und/oder ein Verfallsdatum. Neben dieser Funktion der Bereitstellung der kodierten Information wird mittels der Authentifizierung zusätzlich auch angezeigt, dass ein Sicherheitselement (als das der Mehrschichtkörper 400 ausgebildet ist) präsent und authentisch ist. Auch hier wieder sind die beiden Funktionen für Blinde und Sehbehinderte von großem Nutzen, um die Echtheit der Verpackung und damit auch der darin eingeschlossenen Waren zu überprüfen.

Für Personen, welche ausreichend gut sehen können, kann auch hier wieder ein Anwenderprogramm in einem Smartphone vorgesehen sein, das den Benutzer zu einer Internetadresse oder einem Programm leitet, durch die bzw. das eine weitere Information über die in der Verpackung befindliche Ware gegeben wird. Auch hier kann sich die Information auf optische Sicherheitselemente, insbesondere eine optisch variable Vorrichtung auf dem Mehrschichtkörper 400 beziehen.

Während in Fig. 12 dargestellt ist, dass der Mehrschichtkörper 400 über ein Eck geklebt ist, sind auch andere Aufbringungsarten möglich, etwa das Aufbringen auf eine flache Oberfläche, das Aufbringen auf eine gekrümmte Oberfläche und das Aufbringen über zwei über mehr Ecken.

## Patentansprüche

1. Mehrschichtkörper (100, 200, 300, 400) mit einem Träger (30) und einer darauf angeordneten Schicht (31), die elektrisch leitfähiges Material in einer solchen Anordnung umfasst, dass
- zumindest ein Informationsbereich und zumindest ein Hintergrundbereich (18) bereitgestellt sind, wobei der zumindest eine Informationsbereich einerseits und der zumindest eine Hintergrundbereich andererseits voneinander galvanisch getrennt sind,
wobei
- in jedem Informationsbereich eine erste Zone (10, 10a, 10b, 10c, 10d) mit elektrisch leitfähigem Material bereitgestellt ist, über deren Gesamtheit hinweg ihr elektrisch leitfähiges Material leitend verbunden ist,
- in jedem Hintergrundbereich eine Mehrzahl von zweiten Zonen (24, 26) mit elektrisch leitfähigem Material bereitgestellt ist, wobei die zweiten Zonen galvanisch voneinander getrennt sind, **dadurch gekennzeichnet, dass**
- der zumindest eine Informationsbereich eine Information kodiert, die kapazitiv auslesbar ist,
- der zumindest eine Hintergrundbereich (18) keine durch kapazitive Auslesung erfassbare Information trägt,
- ein Hintergrundbereich (18) alle Informationsbereiche vollständig umgibt,
- das elektrisch leitfähige Material mit einer mittleren Flächenbelegung bereitgestellt ist, die über alle Informationsbereiche und Hintergrundbereiche (18) hinweg um weniger als 25 % variiert,
- ein Informationsbereich eine Mehrzahl von ersten Zonen (10, 10a, 10b, 10c, 10d) umfasst, die durch zumindest eine Leiterbahn galvanisch miteinander gekoppelt sind und/oder zumindest eine erste Zone (10, 10a, 10b, 10c, 10d) eine um einen Faktor von mindestens zwei größere Fläche einnimmt als jede der zweiten Zonen.

2. Mehrschichtkörper (100, 200, 300, 400) nach Anspruch 1,
**dadurch gekennzeichnet,**
**dass** zumindest eine erste Zone (10, 10a, 10b, 10c, 10d) eine um einen Faktor mindestens fünf, bevorzugt mindestens zehn, besonders bevorzugt mindestens 30, größere Fläche einnimmt als jede der zweiten Zonen, und/oder
**dass** das elektrisch leitfähige Material mit einer mittleren Flächenbelegung bereitgestellt ist, die über alle Informationsbereiche und Hintergrundbereiche (18) hinweg um weniger als 10 %, bevorzugt um weniger als 5 % variiert, wobei die mittlere Flächenbelegung auf Teilflächen berechnet wird, die jeweils die gleiche vorbestimmte Größe haben, die entweder 500 µm mal 500 µm oder 300 µm mal 300 µm oder 250 µm mal 250 µm oder 200 µm mal 200 µm oder 150 µm mal 150 µm oder 100 µm mal 100 µm beträgt.

3. Mehrschichtkörper (100) nach einem der Ansprüche 1 oder 2,
**dadurch gekennzeichnet,**
**dass** in zumindest einem Teil der ersten Zonen (10) aus dem elektrisch leitfähigen Material eine Mehrzahl von Leiterbahnen (40) gebildet ist, die eine Breite aus dem Bereich von 1 µm bis 40 µm aufweisen, bevorzugt aus dem Bereich von 5 µm bis 25 µm aufweisen, und die in Mustern angeordnet sind, insbesondere
**dass** in zumindest zwei der zweiten Zonen und bevorzugt jeder zweiten Zone aus dem elektrisch leitfähigen Material Leiterbahnteile (24) gebildet sind, die eine Breite aus dem Bereich von 1 µm bis 40 µm aufweisen, bevorzugt aus dem Bereich von 5 µm bis 25 µm aufweisen, und die galvanisch von Leiterbahnteilen (24) einer anderen der zweiten Zonen über einen Spalt (20) von einer Länge getrennt sind, welche zwischen 50 % und 200 % der Breite der Leiterbahnteile beträgt.

4. Mehrschichtkörper nach einem der Ansprüche 1 bis 3,
**dadurch gekennzeichnet,**
**dass** flächige, linienförmige und/oder punktförmige Bereiche ohne leitfähiges Material in zumindest einem Informationsbereich gemäß einem ersten Muster und flächige, linienförmige und/oder punktförmige Bereiche ohne leitfähiges Material in zumindest einem Hintergrundbereich gemäß einem vom ersten Muster verschiedenen zweiten Muster ausgebildet sind, wobei das erste und/oder zweite Muster insbesondere durch eine statistische Verteilung kleiner, transparenter und nicht leitender punktförmiger Bereiche gebildet ist.

5. Mehrschichtkörper (200) nach einem der vorhergehenden Ansprüche,
**dadurch gekennzeichnet,**
**dass** eine oder mehrere der zweiten Zonen (26) jeweils vollflächig mit elektrisch leitfähigem Material belegt sind.

6. Mehrschichtkörper (200) nach Anspruch 5,
**dadurch gekennzeichnet,**
**dass** eine oder mehrere der ersten Zonen (10) vollflächig mit elektrisch leitfähigem Material belegt sind, sodass ein geschlossener Bereich bereitgestellt ist, und/oder
**dass** eine oder mehrere der ersten Zonen (10) jeweils vollflächig mit elektrisch leitfähigem Material belegte Teilbereiche (26) umfasst, die über leitfähige Stege (34) galvanisch miteinander gekoppelt sind, und/oder
**dass** eine vollflächig mit elektrisch leitfähigem Material belegte zweite Zone von einer vollständig mit elektrisch leitfähigem Material belegten ersten Zone oder einem Teilbereich der ersten Zone über einen Spalt getrennt ist, der nicht breiter als 150 µm ist.

7. Mehrschichtkörper (200) nach einem der vorhergehenden Ansprüche,
**dadurch gekennzeichnet,**
**dass** das elektrisch leitfähige Material eine Schicht eines optischen Sicherheitsmerkmals darstellt und/oder eine Funktion eines optischen Sicherheitsmerkmals erbringt, sodass der Mehrschichtkörper eine optisch variable Vorrichtung, vorzugsweise eine Mikrostruktur in Form eines linearen oder gekreuzten Sinus- oder Rechteck-Beugungsgitters einer Beugungsstruktur Nullter Ordnung, eines 2D/3D- oder 3D-Hologramms, eines Kinegram®, eines Trustseal®, eines farbigen oder achromatischen Blaze-Gitters, einer isotropen oder anisotropen Mattstruktur, eine Mikrolinsenstruktur, eine Makrostruktur, ein Dünnfilmfarbwechselsystem und/oder dergleichen aufweist, insbesondere
**dass** durch die Position, Größe, Ausrichtung und/oder Form aller ersten Zonen und/oder den Abstand mehrerer erster Zonen voneinander eine erste Information kodiert wird, und wobei eine durch das optische Sicherheitsmerkmal bereitgestellte visuelle zweite Information mit der ersten Information teilweise oder vollständig übereinstimmt oder diese erste Information zu einer Gesamtinformation ergänzt.

8. Mehrschichtkörper nach einem der vorhergehenden Ansprüche,
**dadurch gekennzeichnet,**
**dass** er eine zusätzliche, insbesondere vollflächige, nicht-leitende Reflexionsschicht aufweist, wobei diese zusätzliche Reflexionsschicht bevorzugt aus HRI-Materialien gebildet ist.

9. Mehrschichtkörper (100, 200, 300, 400) nach einem der vorhergehenden Ansprüche,
**dadurch gekennzeichnet,**
**dass** der Mehrschichtkörper (100, 200, 300, 400) genau einen Informationsbereich aufweist.

10. Mehrschichtkörper (100, 200, 300, 400) nach einem der vorhergehenden Ansprüche mit einer transparenten Deckschicht, insbesondere einer dielelektrischen Schicht (32) auf der Schicht (31) mit dem elektrisch leitfähigen Material.

11. Mehrschichtkörper (100, 200, 300, 400) nach einem der vorhergehenden Ansprüche, bei dem zumindest eine erste Zone (10, 10a, 10b, 10c, 10d) in einer Erstreckungsrichtung eine Abmessung von zwischen 2,5 mm bis 15 mm hat.

12. Gegenstand (1000, 3000), insbesondere Verpackung oder verpackte Ware, Banknote, Scheck, Kreditkarte, Ausweisdokument, Fahr- oder Eintrittskarte, Anhänger, Spielkarte, oder Sicherheitselement zur Kennzeichnung einer Ware mit einer Markenbezeichnung, mit einem Mehrschichtkörper (400) nach einem der Ansprüche 1 bis 11.

13. Banknote (1000) mit einem Substrat und einem insbesondere streifenförmigen Mehrschichtkörper (400) nach einem der Ansprüche 1 bis 11, der als Sicherheitselement auf das Substrat aufgebracht ist oder als Sicherheitsfaden in das Substrat eingebettet ist.

14. Verpackung, insbesondere für pharmazeutisches Produkt oder Zigaretten, oder verpackte Ware, wobei die Verpackung bzw. die verpackte Ware einen Mehrschichtkörper (400) nach einem der Ansprüche 1 bis 11 umfasst, der auf eine Oberfläche (52, 54) aufgebracht ist.

15. Verfahren zum Herstellen eines Mehrschichtkörpers (100, 200, 300, 400) gemäß einem der Ansprüche 1 bis 11, mit den Schritten:
- Bereitstellen und/oder Erfassen von Abmessungen von Messfeldern einer eine Annäherung und/oder Berührung eines Eingabegegenstands kapazitiv erfassenden Eingabevorrichtung,
- Bereitstellen eines Informationsinhalts,
- Bereitstellen eines Trägers,
- Aufbringen von elektrisch leitfähigem Material in einer solchen Anordnung auf dem Träger, dass
a) zumindest ein erster Informationsbereich bereitgestellt ist, der jeweils eine erste Zone (10, 10a, 10b, 10c, 10d) aufweist, über deren Gesamtheit hinweg ihr elektrisch leitfähiges Material leitend verbunden ist, und wobei die Position, Größe, Form und/oder Ausrichtung aller ersten Zonen und/oder ein Abstand zwischen mehreren ersten Zonen passend zu den Abmessungen der Messfelder gewählt ist, dass für ein Auslesen mithilfe der Eingabeeinrichtung der Informationsinhalt kodiert wird, und dass
b) in derselben Schicht (31) wie der zumindest eine Informationsbereich zumindest ein Hintergrundbereich (18) bereitgestellt ist, der eine Mehrzahl von zweiten Zonen (24, 26) aufweist, welche galvanisch voneinander getrennt sind, so dass beim Auslesen des Informationsinhalts der ersten Zonen mithilfe der Eingabeeinrichtung der Hintergrundbereich von dem Informationsbereich so unterschieden wird, dass der Informationsinhalt der ersten Zonen erfasst wird.

## Claims

1. Multilayer body (100, 20, 300, 400) having a carrier (30) and a layer (31) arranged thereon, said layer (31) comprising electrically conductive material in such an arrangement that
- at least one information region and at least one background region (18) are provided, wherein the at least one information region on one side and the at least one background region on the other side are galvanically separated from each other,
wherein,
- in each information region, a first zone (10, 10a, 10b, 10c, 10d) is provided with electrically conductive material, over the entirety of which zone its electrically conductive material is conductively connected,
- in each background region, a plurality of second zones (24, 26) is provided with electrically conductive material, wherein the second zones are galvanically separated from one another, **characterised in that**,
- the at least one information region codes a piece of information which is capacitively readable,
- the at least one background region (18) does not carry any information which is detectable by capacitive reading,
- a background region (18) completely surrounds all information regions,
- the electrically conductive material is provided with an average surface coating which varies by less than 25% across all information regions and background regions (18),
- an information region comprises a plurality of first zones (10, 10a, 10b, 10c, 10d) which are galvanically coupled to one another by at least one conductor track and/or at least one first zone (10, 10a, 10b, 10c, 10d) occupies a surface area which is larger than each of the two zones by a factor of at least two.

2. Multilayer body (100, 200, 300, 400) according to claim 1,
**characterised in that**
at least one first zone (10, 10a, 10b, 10c, 10d) occupies a surface area which is larger than each of the second zones by a factor of at least five, preferably at least ten, particularly preferably at least 30, and/or
the electrically conductive material is provided with an average surface coating which varies by less than 10%, preferably varies by less than 5%, across all information regions and background regions (18), wherein the average surface coating is calculated on the basis of partial surfaces which in each case have the same predetermined size which is either 500 µm by 500 µm or 300 µm by 300 µm or 250 µm by 250 µm or 200 µm by 200 µm or 150 µm by 150 µm or 100 µm by 10 µm.

3. Multilayer body (100) according to one of claims 1 or 2,
**characterised in that**
a plurality of conductor tracks (40) is formed in at least one part of the first zones (10) from the electrically conductive material, said conductor tracks (40) having a width ranging from 1 µm to 40 µm, preferably ranging from 5 µm to 25 µm, and which are arranged in patterns, in particular
in at least two of the second zones and preferably each second zone, conductor track parts (24) are formed from the electrically conductive material, which have a width ranging from 1 µm to 40 um, preferably ranging 5 µm to 25 um, and which are galvanically separated from conductor track parts (24) of another of the second zones via a gap (20) by a length which is between 50% and 200% of the width of the conductor track parts.

4. Multilayer body according to one of claims 1 to 3,
**characterised in that**
flat, linear and/or point-shaped regions without conductive material are formed in at least one information region according to a first pattern and flat, linear and/or point-shaped regions without conductive material are formed in at least one background region according to a second pattern which is different from the first pattern, wherein the first and/or second pattern is formed, in particular, by a statistical distribution of small, transparent and non-conductive point-shaped regions.

5. Multilayer body (200) according to one of the preceding claims,
**characterised in that**
one or more of the second zones (26) are coated in each case with electrically conductive material over the entire surface

6. Multilayer body (200) according to claim 5,
**characterised in that**
one or more of the first zones (10) are coated with electrically conductive material over the entire region, such that a closed region is provided, and/or one or more of the first zones (10) respectively comprises sub-regions (26) which are coated with electrically conductive material over the entire surface and are galvanically coupled to one another via conductive webs (34), and/or
a second zone coated with electrically conductive material over the entire surface is separated from a first zone coated with electrically conductive material over the entire surface or a sub-region of the first zone via a gap which is not wider than 150 µm.

7. Multilayer body (200) according to one of the preceding claims,
**characterised in that**
the electrically conductive material represents a layer of an optical security feature and/or provides a function of an optical security feature, such that the multilayer body has an optically variable device, preferably a microstructure in the form of a linear or crossed sinusoidal diffraction grating or rectangular diffraction grating of a zero-order diffraction structure, a 2D/3D or 3D hologram, a Kinegram®, a Trustseal®, a coloured or achromatic blazed grating, an isotropic or anisotropic matt structure, a microlens structure, a macrostructure, a thin film colour change system and/or similar, in particular
a first piece of information is coded by the position, size, direction and/or shape of all first zones and/or the distance of several first zones from one another, and wherein a visual second piece of information which is provided by the optical security feature is partially or completely coincident with the first piece of information or supplements this first piece of information to form a total piece of information.

8. Multilayer body according to one of the preceding claims,
**characterised in that**
it has an additional reflection layer, in particular over the entire surface and non-conductive, wherein this additional reflection layer is preferably formed from HRI materials.

9. Multilayer body (100, 200, 300, 400) according to one of the preceding claims,
**characterised in that**
the multilayer body (100, 200, 300, 400) has precisely one information region.

10. Multilayer body (100, 200, 300, 400) according to one of the preceding claims, having a transparent top layer, in particular a dielectric layer (32) on the layer (31) having the electrically conductive material.

11. Multilayer body (100, 200, 300, 400) according to one of the preceding claims, in which at least one first zone (10, 10a, 10b, 10c, 10d) has a measurement of 2.5 mm to 15 mm in an extension direction.

12. Object (1000, 3000), in particular packaging or packaged good, banknote, cheque, credit card, identification document, travel or admission ticket, tag, playing card, or security element for identifying a good with a brand name, having a multilayer body (400) according to one of claims 1 to 11.

13. Banknote (1000) having a substrate and an in particular strip-shaped multilayer body (400) according to one of claims 1 to 11, which is applied to the substrate as a security element or is embedded in the substrate as a security thread.

14. Packaging, in particular for a pharmaceutical product or cigarettes, or packaged good, wherein the packaging or the packaged good comprises a multilayer body (400) according to one of claims 1 to 11 which is applied to a surface (52, 54).

15. Method for producing a multilayer body (100, 200, 300, 400) according to one of claims 1 to 11, having the steps of:
- provision and/or detection of measurements of measuring fields of an input device capacitively detecting an approach and/or contact of an input object,
- provision of an information content
- provision of a carrier
- application of electrically conductive material to the carrier in such an arrangement that
a) at least one first information region is provided, which, in each case, has a first zone (10, 10a, 10b, 10c, 10d), over the entirety of which its electrically conductive material is conductively connected and wherein the position, size, shape and/or orientation of all first zones and/or a distance between several first zones are selected to match the measurements of the measuring fields, such that the information content is coded for reading using the input device, and
b) at least one background region (18) is provided in the same layer (31) as the at least one information region, said background region (18) having a plurality of second zones (24, 26) which are galvanically separated from one another, such that when reading the information content of the first zones using the input device, the background region is differentiated from the information region in such a way that the information content of the first zones is detected.

## Revendications

1. Corps multicouche (100, 200, 300, 400) avec un support (30) et une couche (31) disposée dessus qui comporte du matériau électroconducteur dans une telle disposition, que
- au moins une zone d'informations et au moins une zone d'arrière-plan (18) sont mises à disposition, dans lequel l'au moins une zone d'informations d'une part et l'au moins une zone d'arrière-plan d'autre part sont séparées par voie galvanique l'une de l'autre,
dans lequel
- dans chaque zone d'informations, une première zone (10, 10a, 10b, 10c, 10d) est mise à disposition avec un matériau électroconducteur, sur l'intégralité de laquelle son matériau électroconducteur est raccordé par conduction,
- dans chaque zone d'arrière-plan une pluralité de secondes zones (24, 26) est mise à disposition avec un matériau électroconducteur, dans lequel les secondes zones sont séparées par voie galvanique l'une de l'autre,
**caractérisé en ce que**
- l'au moins une zone d'informations code une information qui peut être lue par voie capacitive,
- l'au moins une zone d'arrière-plan (18) ne porte aucune information détectable par lecture capacitive,
- une zone d'arrière-plan (18) entoure complètement toutes les zones d'informations,
- le matériau électroconducteur est mis à disposition avec une occupation de surface moyenne qui varie sur toutes les zones d'informations et zones d'arrière-plan (18) de moins de 25 %,
- une zone d'informations comporte une pluralité de premières zones (10, 10a, 10b, 10c, 10d) qui sont couplées par voie galvanique les unes aux autres par au moins une piste conductive et/ou au moins une première zone (10, 10a, 10b, 10c, 10d) occupe une surface plus grande d'un facteur d'au moins deux que chacune des secondes zones.

2. Corps multicouche (100, 200, 300, 400) selon la revendication 1,
**caractérisé en ce**
**qu'**au moins une première zone (10, 10a, 10b, 10c, 10d) occupe une surface plus grande d'un facteur d'au moins cinq, de préférence d'au moins dix, de manière particulièrement préférée d'au moins 30 que chacune des secondes zones, et/ou
**que** le matériau électroconducteur est mis à disposition avec une occupation de surface moyenne qui varie sur toutes les zones d'informations et zones d'arrière-plan (18) de moins de 10 %, de préférence de moins de 5 %, dans lequel l'occupation de surface moyenne sur des surfaces partielles est calculée, lesquelles possèdent respectivement la même grandeur prédéterminée qui s'élève à 500 µm fois 500 µm ou 300 µm fois 300 µm ou 250 µm fois 250 µm ou 200 µm fois 200 µm ou 150 µm fois 150 µm ou 100 µm fois 100 µm.

3. Corps multicouche (100) selon l'une quelconque des revendications 1 ou 2,
**caractérisé en ce**
**que**, dans au moins une partie des premières zones (10), une pluralité de pistes conductives (40) est formée à partir du matériau électroconducteur, lesquelles présentent une largeur de la zone de 1 µm à 40 µm, de préférence de la zone de 5 µm à 25 µm, et lesquelles sont disposées dans des motifs, en particulier
**que**, dans au moins deux des secondes zones et de préférence chaque seconde zone, des parties de piste conductive (24) sont formées à partir du matériau électroconducteur, lesquelles présentent une largeur de la plage de 1 µm à 40 µm, de préférence de la plage de 5 µm à 25 µm, et lesquelles sont séparées par voie galvanique de parties de piste conductive (24) d'une autre des secondes zones par le biais d'une fente (20) d'une longueur qui s'élève entre 50 % et 200 % de la largeur des parties de piste conductive.

4. Corps multicouche selon l'une quelconque des revendications 1 à 3,
**caractérisé en ce**
**que** des zones planes, linéaires et/ou ponctuelles sont réalisées sans matériau conducteur dans au moins une zone d'informations selon un premier motif et des surfaces planes, linéaires et/ou ponctuelles sans matériau conducteur dans au moins une zone d'arrière-plan selon un second motif différent du premier motif, dans lequel le premier et/ou second motif est formé en particulier par une distribution statistique de petites zones transparentes et ponctuelles non conductrices.

5. Corps multicouche (200) selon l'une quelconque des revendications précédentes,
**caractérisé en ce**
**qu'**une ou plusieurs des secondes zones (26) sont occupées respectivement sur toute la surface par du matériau électroconducteur.

6. Corps multicouche (200) selon la revendication 5,
**caractérisé en ce**
**qu'**une ou plusieurs des premières zones (10) sont occupées sur toute la surface par du matériau électroconducteur de sorte qu'une zone fermée soit mise à disposition, et/ou
**qu'**une ou plusieurs des premières zones (10) comporte des zones partielles (26) occupées respectivement sur toute la surface par du matériau électroconducteur qui sont couplées par voie galvanique entre elles par le biais de nervures conductrices (34),
**qu'**une seconde zone occupée sur toute la surface par du matériau électroconducteur est séparée d'une première zone occupée complètement par du matériau électroconducteur ou une zone partielle de la première zone par le biais d'une fente qui n'est pas plus large que 150 µm.

7. Corps multicouche (200) selon l'une quelconque des revendications précédentes,
**caractérisé en ce**
**que** le matériau électroconducteur représente une couche d'une caractéristique de sécurité optique et/ou assure une fonction d'une caractéristique de sécurité optique de sorte que le corps multicouche présente un dispositif variable optiquement, de préférence une microstructure sous la forme d'un réseau de réfraction sinusoïdal ou rectangulaire linéaire ou croisé d'une structure de réfraction d'ordre nul, d'un hologramme 2D/3D ou 3D, d'un Kinegram®, d'un Trustseal®, d'un réseau à échelette coloré ou achromatique, d'une structure mate isotrope ou anisotrope, une structure de microlentille, une macrostructure, un système de changement de couleur de film mince et/ou similaire, en particulier
**que** par la position, la grandeur, l'orientation et/ou la forme de toutes les premières zones et/ou la distance de plusieurs premières zones les unes des autres une première information est codée, et dans lequel une seconde information visuelle mise à disposition par la caractéristique de sécurité optique concorde avec la première information partiellement ou complètement ou complète cette première information pour former une information entière.

8. Corps multicouche selon l'une quelconque des revendications précédentes,
**caractérisé en ce**
**qu'**il présente une couche de réflexion supplémentaire, en particulier sur la surface entière, non conductrice, dans lequel cette couche de réflexion supplémentaire est de préférence formée de matériaux HRI.

9. Corps multicouche (100, 200, 300, 400) selon l'une quelconque des revendications précédentes,
**caractérisé en ce**
**que** le corps multicouche (100, 200, 300, 400) présente précisément une zone d'informations.

10. Corps multicouche (100, 200, 300, 400) selon l'une quelconque des revendications précédentes, avec une couche de recouvrement transparente, en particulier une couche diélectrique (32) sur la couche (31) avec le matériau électroconducteur.

11. Corps multicouche (100, 200, 300, 400) selon l'une quelconque des revendications précédentes, pour lequel au moins une première zone (10, 10a, 10b, 10c, 10d) présente dans un sens d'étendue une dimension entre 2,5 mm et 15 mm.

12. Objet (1000, 3000), en particulier emballage ou marchandise emballée, billet de banque, chèque, carte de crédit, document d'identité, titre de transport ou billet d'entrée, pendentif, carte de jeu ou élément de sécurité pour la caractérisation d'une marchandise avec une désignation de marque, avec un corps multicouche (400) selon l'une quelconque des revendications 1 à 11.

13. Billet de banque (1000) avec un substrat et un corps multicouche (400) en particulier en forme de bande selon l'une quelconque des revendications 1 à 11 qui est appliqué comme élément de sécurité sur le substrat ou est intégré comme fil de sécurité dans le substrat.

14. Emballage, en particulier pour produit pharmaceutique ou cigarettes ou marchandise emballée, dans lequel l'emballage ou la marchandise emballée comporte un corps multicouche (400) selon l'une quelconque des revendications 1 à 11 qui est appliqué sur une surface (52, 54).

15. Procédé de fabrication d'un corps multicouche (100, 200, 300, 400) selon l'une quelconque des revendications 1 à 11, avec les étapes :
- la mise à disposition et/ou la détection de dimensions de champs de mesure d'un dispositif de saisie détectant par voie capacitive une approche et/ou un contact d'un objet de saisie,
- la mise à disposition d'un contenu d'informations,
- la mise à disposition d'un support,
- l'application de matériau électroconducteur dans une telle disposition sur le support que
a) au moins une première zone d'informations est mise à disposition, laquelle présente respectivement une première zone (10, 10a, 10b, 10c, 10d), sur l'intégralité de laquelle son matériau électroconducteur est raccordé par conduction, et dans lequel la position, la grandeur, la forme et/ou l'orientation de toutes les premières zones et/ou une distance entre plusieurs premières zones est choisie de manière adaptée aux dimensions des champs de mesure, que pour une lecture à l'aide du dispositif de saisie le contenu d'informations est codé, et que
b) dans la même couche (31) comme l'au moins une zone d'informations au moins une zone d'arrière-plan (18) est mise à disposition, laquelle présente une pluralité de secondes zones (24, 26) qui sont séparées par voie galvanique l'une de l'autre de sorte que lors de la lecture du contenu d'informations des premières zones à l'aide du dispositif de saisie la zone d'arrière-plan soit différente de la zone d'informations de sorte que le contenu d'informations des premières zones soit détecté.
